(19) Europäisches Patentamt
European Patent Office
Office européen des brevets

(11) EP 3 247 736 B1

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **16701469.5**

(22) Anmeldetag: **22.01.2016**

(51) Int Cl.:
***C08G 65/46*** *(2006.01)* ***C08G 75/23*** *(2006.01)*
***C08J 9/26*** *(2006.01)*

(86) Internationale Anmeldenummer:
**PCT/EP2016/051372**

(87) Internationale Veröffentlichungsnummer:
**WO 2016/116616 (28.07.2016 Gazette 2016/30)**

# (54) ENTSALZUNG VON POLYARYLETHERN AUS EINEM SCHMELZPOLYMERISATIONSVERFAHREN

DESALINATION OF POLYARYL ETHERS FROM A MELT POLYMERIZATION PROCESS

DESSALAGE DE POLYARYLÉTHER SELON UN PROCÉDÉ DE POLYMÉRISATION EN MASSE FONDUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015 EP 15152256**

(43) Veröffentlichungstag der Anmeldung:
**29.11.2017 Patentblatt 2017/48**

(73) Patentinhaber: **BASF SE**
**67056 Ludwigshafen (DE)**

(72) Erfinder:
- **GRAMLICH, Simon**
  **69493 Hirschberg (DE)**
- **STAMMER, Achim**
  **67251 Freinsheim (DE)**

(56) Entgegenhaltungen:
**EP-A1- 2 444 445**
**WO-A1-2010/046482**
**CN-B- 102 786 681**
**GB-A- 2 245 577**
**GB-A- 2 376 019**
**US-A- 4 113 698**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 247 736 B1

**Beschreibung**

Die vorliegende Erfindung betrifft ein Verfahren zur Entsalzung eines salzhaltigen Polymers (sP), das einen Polyarylether und ein Salz (S) enthält, sowie das nach diesem Verfahren erhältliche entsalzte Polymer (eP), das den Polyarylether enthält.

Eine wirtschaftlich besonders bedeutende Gruppe von Polyarylethern sind Polyarylethersulfone. Polyarylether-Polymere gehören zur Gruppe der Hochleistungsthermoplasten und zeichnen sich durch hohe Wärmeformbeständigkeit bei guten mechanischen Eigenschaften und einer inhärenten Flammwidrigkeit aus.

Die Herstellung von Polyarylether-Polymeren ist seit langem bekannt. Die Herstellung von Polyarylether-Polymeren erfolgt im Allgemeinen durch Polykondensation entsprechender aromatischer Dihydroxyverbindungen mit aromatischen Dihalogenverbindungen, wobei die Polykondensation in einem aprotisch-polaren Lösungsmittel in Gegenwart von Kaliumcarbonat als Base durchgeführt wird. Die Polyarylether-Polymere fallen im Herstellungsprozess in Form einer Lösung an, die die Polyarylether-Polymere gelöst in dem aprotisch-polaren Lösungsmittel enthält. Das während der Reaktion gebildete Kaliumhalogenid kann mechanisch, beispielsweise durch Zentrifugation oder Filtration, von der Lösung abgetrennt werden, so dass die Lösung und somit auch die nachfolgend isolierten Polyarylether-Polymere nur wenig oder sogar kein Kaliumhalogenid enthalten. Zur anschließenden Isolierung der Polyarylether-Polymere aus dem aprotisch-polaren Lösungsmittel sind im Stand der Technik verschiedene Methoden beschrieben.

Gemäß den in DE 1 957 091 und EP 0 000 361 beschriebenen Verfahren zur Isolierung von Polyarylether-Polymeren, die durch Polykondensation in einem aprotisch-polaren Lösungsmittel hergestellt werden, wird die Lösung, die die Polyarylether-Polymere gelöst in einem aprotisch-polaren Lösungsmittel enthält, in Wasser eingebracht und die Polyarylether-Polymere dadurch gefällt.

Die DE 3 644 464 und die EP 2 305 740 beschreiben ebenfalls Verfahren zur Herstellung von Polyarylether-Polymeren durch Polykondensation in einem aprotisch-polaren Lösungsmittel. Die erhaltene Lösung, die die Polyarylether-Polymere gelöst in dem aprotisch-polaren Lösungsmittel enthält, wird anschließend in ein Fällbad vertropft, das Wasser enthält, und so die Polyarylether-Polymere in Form von Perlen erhalten.

Die US 4,113,698 beschreibt ein Verfahren zur Herstellung von Polyetherketonen durch nukleophile Polykondensation eines Alkalimetallbisphenolats und einer Dihalogenverbindung und/oder einem Alkalimetallhalophenolat, in einem aromatischen Sulfonlösungsmittel. Das erhaltene Produkt wird anschließend zerkleinert auf eine Partikelgröße von < 500 $\mu$m und aus diesen Partikeln, das bei der Reaktion entstandene Alkalimetallhalogenid, ausgewaschen.

Die GB 2 376 019 beschreibt die Aufreinigung von Polyetherketonen und Polyetheretherketonen. Zur Aufreinigung werden die Polyetherketone oder Polyetheretherketone mit Wasser in Kontakt gebracht. Dabei liegen die Polyetherketone oder Polyetheretherketone in Form von Pulvern, Pellets oder Granalien vor. In dem Wasser kann dann in den Polyetherketonen und Polyetheretherketonen enthaltenes Alkalimetallhalogenidsalz entfernt werden.

Die GB 2 245 577 beschreibt ein Verfahren zur Herstellung von Polyarylsulfonen, ausgehend von Dihydroxyverbindungen und Dihalogenverbindungen, vorzugsweise in Gegenwart eines Lösungsmittels. Außerdem wird ein Alkalimetallkarbonat oder-Hydroxid eingesetzt. Anschließend wird die erhaltene Reaktionsmischung abgekühlt wobei sie fest wird und schließlich zu Partikeln mit einer maximalen Größe von 0,5 mm gemahlen wird. Anschließend wird das in der Reaktionsmischung enthaltene Alkalimetallsalz mit Wasser extrahiert.

Auch die EP 2 444 445 beschreibt ein Verfahren zur Herstellung von Polymeren, wobei die Edukte in Gegenwart von einem organischen Lösungsmittel und einem Alkalimetallkarbonat umgesetzt werden. Die Polymerlösung wird in Wasser gegeben unter Erhalt eines festen Polymers. Das feste Polymer wird schließlich zu einem Pulver vermahlen und in Wasser ausgekocht, um das Salz aus diesem zu entfernen.

Die WO 2010/046482 beschreibt die Herstellung von Polyaryletherketonen in Gegenwart von Diphenylsulfon als Lösungsmittel, sowie in Gegenwart von Natriumkarbonat und fein gemahlenem Kaliumkarbonat. Die erhaltene Reaktionsmischung wird abgekühlt, auf eine Teilchengröße von < 2 mm gemahlen und anschließend mit einer Mischung aus Wasser und Aceton die darin enthaltenen Salze sowie das Diphenylsulfon entfernt.

Allen im Stand der Technik beschriebenen Verfahren, bei denen Polyarylether-Polymere durch Polykondensation in einem aprotisch-polaren Lösungsmittel hergestellt werden, ist gemeinsam, dass sie nur einen geringen Gehalt an Alkalimetallhalogenid aufweisen. Allerdings kann das aprotisch-polare Lösungsmittel nicht vollständig aus den Polyarylether-Polymeren entfernt werden. Diese aprotisch-polaren Lösungsmittel sind folglich auch in Formteilen enthalten, die aus den nach den vorstehend beschriebenen Verfahren erhältlichen Polyarylether-Polymeren hergestellt werden.

Die aprotisch-polaren Lösungsmittel können beim Gebrauch der Formteile aus diesen migrieren. Die so erhaltenen Formteile sind daher aus toxikologischer Sicht nicht unbedenklich. Die Formteile sind deswegen insbesondere für Lebensmittelanwendungen häufig ungeeignet.

Um einen Restgehalt an aprotisch-polarem Lösungsmittel in den Polyarylether-Polymeren zu vermeiden, sind im Stand der Technik Schmelzepolymerisationsverfahren zur Herstellung von Polyarylether-Polymeren beschrieben.

Die DE 2 749 645 beschreibt ein Verfahren zur Herstellung von Polyarylethern in einem Schmelzepolymerisationsverfahren durch Polykondensation von mindestens einem Bisphenol mit mindestens einer Dihalogenbenzolverbindung oder von einem Halogenphenol in Gegenwart von wasserfreiem Alkalimetallcarbonat in Abwesenheit von Lösungs- oder Verdünnungsmitteln. Die Reaktion wird in einem Kneter oder in einem Extruder durchgeführt. Die anorganischen Bestandteile, die während der Kondensationsreaktion gebildet werden, beispielsweise Natrium- oder Kaliumchlorid, werden durch Lösen und anschließendes Filtrieren, Sieben oder Extrahieren aus den Polyethern entfernt.

Die WO 2014/033321 beschreibt ebenfalls ein Verfahren zur Herstellung von aromatischen Polyarylethern in einem Schmelzepolymerisationsverfahren durch Umsetzung einer Dichlordiphenylsulfonkomponente mit einer Bisphenolkomponente in Gegenwart eines Alkalimetallcarbonats in Abwesenheit von Lösungs- oder Verdünnungsmitteln, wobei die Reaktion in einem Mischkneter durchgeführt wird. Die so erhaltenen Polyarylether-Polymere werden auf eine Teilchengröße von etwa 2 mm vermahlen und zweimal für 3 Stunden bei 80 °C mit Wasser gewaschen, um das als Nebenprodukt gebildete Alkalimetallchlorid zu entfernen. Nach dem in der WO 2014/033321 beschriebenen Verfahren können nur 80 % des Akalimetallchlorids aus dem Polyarylether entfernt werden.

Die durch Schmelzepolymerisation hergestellten Polyarylether-Polymere weisen keinen Restgehalt an aprotisch-polarem Lösungsmittel auf.

Nachteilig bei den im Stand der Technik beschriebenen Verfahren zur Herstellung von Polyarylether-Polymeren durch ein Schmelzepolymerisationverfahren ist allerdings die unvollständige Abtrennung des Alkalimetallchlorids aus den erhaltenen Polyarylether-Polymeren. Die Polyarylether-Polymere besitzen dadurch eine geringe Lagerstabilität, da insbesondere Kaliumchlorid hygroskopisch ist und Feuchtigkeit aus der Umgebung aufnimmt. Dadurch quellen die Polyarylether-Polymere. Zudem können sie nur noch schlecht weiterverarbeitet werden, da das Alkalimetallchlorid beim Wideraufschmelzen ein Fortschreiten der Polymerisationsreaktion katalysiert. Die erhaltenen Polyarylether-Polymere besitzen somit eine geringe Schmelzestabilität. Zudem werden Polyarylether-Polymere häufig als Membranen eingesetzt. Ist der Restgehalt insbesondere an Kaliumchlorid in den Polyarylether-Polymeren zu groß, bilden sich bei der Herstellung der Membranen Löcher in den Membranen, die dadurch für den Einsatz als Membran ungeeignet sind.

Die CN 102786681 beschreibt eine Vorrichtung zur Reinigung eines Polymers. Dabei wird bevorzugt ein fester und pulverförmiger partikulärer oder ringförmiger Polyarylenether mit Wasser gewaschen.Der vorliegenden Erfindung liegt somit die Aufgabe zugrunde, ein verbessertes Verfahren zur Entsalzung eines salzhaltigen Polymers (sP), das einen Polyarylether und ein Salz (S) enthält, bereitzustellen. Das so hergestellte entsalzte Polymer (eP) soll einen geringen oder keinen Restgehalt an aprotisch-polaren Lösungsmitteln und einen reduzierten Restgehalt an Salz (S) im Vergleich zu den nach den Verfahren des Standes der Technik erhältlichen Polyarylether-Polymeren aufweisen. Das erfindungsgemäße Verfahren und die dadurch erhältlichen entsalzten Polymere (eP) sollen die Nachteile der im Stand der Technik beschriebenen Verfahren und der daraus erhältlichen Polymere nicht oder nur in vermindertem Maße aufweisen. Das erfindungsgemäße Verfahren soll dabei einfach, möglichst fehlerunanfällig und kostengünstig durchführbar sein.

Diese Aufgabe wird erfindungsgemäß gelöst durch ein Verfahren zur Entsalzung eines salzhaltigen Polymers (sP), das einen Polyarylether und ein Salz (S) enthält, umfassend die Schritte

a) mechanische Vergrößerung der Oberfläche des salzhaltigen Polymers (sP) unter Erhalt eines oberflächenvergrößerten salzhaltigen Polymers (osP),

b) in Kontakt bringen des oberflächenvergrößerten salzhaltigen Polymers (osP) aus Verfahrensschritt a) mit einem Extraktionsmittel (E) unter Erhalt eines entsalzten Polymers (eP), das den Polyarylether enthält, und eines salzhaltigen Extraktionsmittels (sE), das das Extraktionsmittel (E) und das Salz (S) enthält, wobei die mechanische Vergrößerung der Oberfläche des salzhaltigen Polymers (sP) in Verfahrensschritt a) durch Verschäumen oder Verstrecken des salzhaltigen Polymers (sP) erfolgt.

Gegenstand der vorliegenden Erfindung ist außerdem ein Verfahren zur Entsalzung eines salzhaltigen Polymers (sP), das einen Polyarylether und ein Salz (S) enthält, umfassend die Schritte

a) mechanische Vergrößerung der Oberfläche des salzhaltigen Polymers (sP) unter Erhalt eines oberflächenvergrößerten salzhaltigen Polymers (osP),
b) in Kontakt bringen des oberflächenvergrößerten salzhaltigen Polymers (osP) aus Verfahrensschritt a) mit einem Extraktionsmittel (E) unter Erhalt eines entsalzten Polymers (eP), das den Polyarylether enthält, und eines salzhaltigen Extraktionsmittels (sE), das das Extraktionsmittel (E) und das Salz (S) enthält.

Es wurde überraschend festgestellt, dass mit dem erfindungsgemäßen Verfahren im Vergleich zu den im Stand der Technik beschriebenen Verfahren im gleichen Zeitraum mehr Salz (S) aus dem salzhaltigen Polymer (sP) entfernt werden kann. Zudem kann das Salz (S) schneller aus dem salzhaltigen Polymer (sP) entfernt werden. Überraschenderweise kann mit dem erfindungsgemäßen Verfahren ein Salzgehalt von maximal 150 Gew.-ppm im entsalzten Polymer (eP) erreicht werden. Dadurch wird die Lagerstabilität des entsalzten Polymers (eP) deutlich erhöht gegenüber den

Polyarylether-Polymeren aus dem Stand der Technik, die durch ein Schmelzepolymerisationsverfahren hergestellt werden. Das entsalzte Polymer (eP) besitzt zudem eine gute Schmelzestabilität.

Das erfindungsgemäße Verfahren ist außerdem geeignet für die Entsalzung von salzhaltigen Polymeren (sP), die durch ein Schmelzepolymerisationsverfahren hergestellt worden sind. Werden in dem erfindungsgemäßen Verfahren durch Schmelzepolymerisationsverfahren hergestellte salzhaltige Polymere (sP) eingesetzt, so weisen die entsalzten Polymere (eP) keinen Restgehalt an Lösungsmittel auf. Somit sind die so erhältlichen entsalzten Polymere (eP) auch für die Herstellung von Formteilen einsetzbar, die für Lebensmittelanwendungen geeignet sind.

*Salzhaltiges Polymer (sP)*

Erfindungsgemäß enthält das salzhaltige Polymer (sP) einen Polyarylether und ein Salz (S).

Unter "einem Polyarylether" wird erfindungsgemäß genau ein Polyarylether als auch Mischungen aus zwei oder mehreren Polyarylethern verstanden.

Unter "ein Salz (S)" wird erfindungsgemäß genau ein Salz (S) als auch Mischungen aus zwei oder mehreren Salzen (S) verstanden.

In einer Ausführungsform enthält das salzhaltige Polymer (sP) mindestens 50 Gew.-%, besonders bevorzugt mindestens 60 Gew.-%, mehr bevorzugt mindestens 65 Gew.-% und insbesondere bevorzugt mindestens 70 Gew.-% des Polyarylethers, jeweils bezogen auf das Gesamtgewicht des salzhaltigen Polymers (sP).

In einer weiteren Ausführungsform enthält das salzhaltige Polymer (sP) höchstens 99,98 Gew.-%, bevorzugt höchstens 99 Gew.-%, mehr bevorzugt höchstens 90 Gew.-% und insbesondere bevorzugt höchstens 80 Gew.-% des Polyarylethers, jeweils bezogen auf das Gesamtgewicht des salzhaltigen Polymers (sP).

Bevorzugt enthält das salzhaltige Polymer (sP) 50 bis 99,98 Gew.-% des Polyarylethers, besonders bevorzugt 60 bis 99 Gew.-% des Polyarylethers, insbesondere bevorzugt 65 bis 90 Gew.-% des Polyarylethers und am meisten bevorzugt 70 bis 80 Gew.-% des Polyarylethers, jeweils bezogen auf das Gesamtgewicht des salzhaltigen Polymers (sP).

In einer Ausführungsform enthält das salzhaltige Polymer (sP) mindestens 0,02 Gew.-%, bevorzugt mindestens 1 Gew.-%, besonders bevorzugt mindestens 10 Gew.-% und insbesondere bevorzugt mindestens 20 Gew.-% des Salzes (S), jeweils bezogen auf das Gesamtgewicht des salzhaltigen Polymers (sP).

In einer weiteren Ausführungsform enthält das salzhaltige Polymer (sP) höchstens 50 Gew.-%, bevorzugt höchstens 40 Gew.-%,mehr bevorzugt höchstens 35 Gew.-% und insbesondere bevorzugt höchstens 30 Gew.-% des Salzes (S), jeweils bezogen auf das Gesamtgewicht des salzhaltigen Polymers (sP).

Es ist außerdem bevorzugt, dass das salzhaltige Polymer (sP) 0,02 bis 50 Gew.-% des Salzes (S) enthält, besonders bevorzugt 1 bis 40 Gew.-% des Salzes (S), insbesondere bevorzugt 10 bis 35 Gew.-% und am meisten bevorzugt 20 bis 30 Gew.-% des Salzes (S), jeweils bezogen auf das Gesamtgewicht des salzhaltigen Polymers (sP).

Es ist möglich, dass das salzhaltige Polymer (sP) zusätzlich Additive enthält. Geeignete Additive sind dem Fachmann als solche bekannt. Für den Fall, dass das salzhaltige Polymer (sP) zusätzlich Additive enthält, enthält das salzhaltige Polymer (sP) im Allgemeinen 0,01 bis 10 Gew.-% Additive, bevorzugt 0,01 bis 7 Gew.-% Additive und insbesondere bevorzugt 0,01 bis 5 Gew.-% Additive, jeweils bezogen auf das Gesamtgewicht des salzhaltigen Polymers (sP). In einer Ausführungsform enthält das salzhaltige Polymer (sP) keine zusätzlichen Additive.

Darüber hinaus kann das salzhaltige Polymer (sP) eine Carbonatverbindung (C) enthalten. Für die Carbonatverbindung (C) gelten die weiter unten beschriebenen Ausführungen und Bevorzugungen. Für den Fall, dass das salzhaltige Polymer (sP) eine Carbonatverbindung (C) enthält, enthält das salzhaltige Polymer (sP) im Bereich von 0,01 bis 20 Gew.-%, bevorzugt im Bereich von 0,01 bis 5 Gew.-% und insbesondere bevorzugt im Bereich von 0,01 bis 2 Gew.-% der Carbonatverbindung (C), bezogen auf das Gesamtgewicht des salzhaltigen Polymers (sP). Die Carbonatverbindung (C) ist von dem Salz (S) verschieden. In einer Ausführungsform enthält das salzhaltige Polymer (sP) keine Carbonatverbindung (C).

"Eine Carbonatverbindung (C)" bedeutet im Rahmen der vorliegenden Erfindung sowohl genau eine Carbonatverbindung (C) als auch eine Mischung aus zwei oder mehreren Carbonatverbindungen (C).

In einer weiteren Ausführungsform enthält das salzhaltige Polymer (sP) 50 bis 99,98 Gew.-% des Polyarylethers und 0,02 bis 50 Gew.-% des Salzes (S), bevorzugt 60 bis 99 Gew.-% des Polyarylethers und 1 bis 40 Gew.-% des Salzes (S), insbesondere bevorzugt 65 bis 90 Gew.-% des Polyarylethers und 10 bis 35 Gew.-% des Salzes (S) und am meisten bevorzugt 70 bis 80 Gew.-% des Polyarylethers und 20 bis 30 Gew.-% des Salzes (S), jeweils bezogen auf das Gesamtgewicht des salzhaltigen Polymers (sP). Im Allgemeinen ergeben die Summen der Gewichtsprozente des Polyarylethers, des Salzes (S) und gegebenenfalls der zusätzlichen Additive sowie der Carbonatverbindung (C) 100 %.

Die Viskositätszahlen des salzhaltigen Polymers (sP) liegen im Allgemeinen im Bereich von 30 bis 120 ml/g, bevorzugt von 35 bis 110 ml/g und insbesondere bevorzugt von 40 bis 100 ml/g, bestimmt durch Ubbelohde-Viskositätszahlmessung einer 0,01 g/ml Lösung des salzhaltigen Polymers (sP) in einer 1 : 1 Phenol/1,2-Dichlorbenzol-Mischung nach DIN 51562.

Im Allgemeinen enthält das Salz (S) ein Kation und ein Halogenid, bevorzugt ein Kation und ein Chlorid. Ein

Halogenid wird auch als Halogenidanion bezeichnet. Ein Chlorid wird auch als Chloridanion bezeichnet.

Unter "ein Kation" wird erfindungsgemäß genau ein Kation als auch Mischungen aus zwei oder mehreren Kationen verstanden.

Unter "ein Halogenid" wird erfindungsgemäß genau ein Halogenid als auch Mischungen aus zwei oder mehreren Halogeniden verstanden.

Die Gew.-% des Salzes (S) in dem salzhaltigen Polymer (sP) können daher über die Messung der Gew.-% des Halogenids, bevorzugt des Chlorids, in dem salzhaltigen Polymer (sP) bestimmt werden. Unter den Gew.-% des Halogenids sind die Gew.-% des anionischen Halogens zu verstehen, also die Gew.-% des freien Halogenids und nicht die Gew.-% des polymergebundenen Halogens. Entsprechendes gilt für die Gew.-% des Chlorids. Diese beziehen sich auf die Gew.-% des ionischen Chlors und somit auf die Gew.-% des freien Chlorids und nicht auf die Gew.-% des polymergebundenen Chlors.

Zur Bestimmung der Gew.-% an Halogenid, bevorzugt an Chlorid in dem salzhaltigen Polymer (sP), werden 700 mg des salzhaltigen Polymers (sP) in N-Methylpyrrolidon (NMP) gelöst und die erhaltene Lösung mit einer Essigsäure-/Aceton-Mischung (Verhältnis von Essigsäure zu Aceton: 1:1) verdünnt. Die so erhaltene Lösung wird mit Schwefelsäure oder Salpetersäure angesäuert und anschließend mit einer 0,0002 mol/l Silbernitratlösung potentiometrisch titiert, wobei Methylorange als Indikator eingesetzt wird. Als Elektrode dient eine Ag-Titrode der Firma Metrohm.

Über die Gew.-% an Halogenid können anschließend die Gew.-% des ebenfalls im Salz (S) enthaltenen Kations im salzhaltigen Polymer (sP) berechnet werden. Methoden hierzu sind dem Fachmann bekannt. Aus der Summe der Gew.-% des Halogenids sowie der Gew.-% des Kations im salzhaltigen Polymer ergeben sich dann die Gew.-% des Salzes (S) im salzhaltigen Polymer (sP).

Die Gew.-% an Salz (S) in dem nachfolgend beschriebenen vorentsalzten Polymer (veP) und dem entsalzten Polymer (eP) werden erfindungsgemäß in gleicher Weise bestimmt.

Polyarylether sind dem Fachmann als Polymerklasse bekannt. Für den Einsatz im erfindungsgemäßen Verfahren kommen im Prinzip alle dem Fachmann bekannten und/oder nach bekannten Methoden herstellbaren Polyarylether in Betracht. Entsprechende Methoden zur Herstellung werden weiter unten erläutert.

Bevorzugte Polyarylether sind aus Bausteinen der allgemeinen Formel (I) aufgebaut:

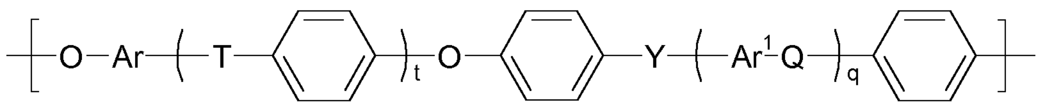

(I),

wobei die Symbole t, q, Q, T, Y, Ar und $Ar^1$ folgende Bedeutungen aufweisen:

- t, q: unabhängig voneinander 0, 1, 2 oder 3,
- Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, und wobei wenigstens eines aus Q, T und Y für $-SO_2-$ steht und
- Ar, $Ar^1$: unabhängig voneinander eine Arylengruppe mit von 6 bis 18 Kohlenstoffatomen.

Falls Q, T oder Y unter den oben genannten Voraussetzungen eine chemische Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und $-SO_2-$, mit der Maßgabe, dass wenigstens eines aus der Gruppe bestehend aus Q, T und Y für $-SO_2-$ steht. Diese Polyarylether sind Polyarylethersulfone.

Gegenstand der vorliegenden Erfindung ist somit auch ein Verfahren, bei dem der Polyarylether ein Polyarylethersulfon ist.

Sofern Q, T oder Y $-CR^aR^b-$ sind, stehen $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe.

Bevorzugte $C_1$-$C_{12}$-Alkylgruppen umfassen lineare und verzweigte, gesättigte Alkylgruppen mit von 1 bis 12 Kohlenstoffatomen. Insbesondere sind folgende Reste zu nennen: $C_1$-$C_6$-Alkylrest, wie Methyl, Ethyl, n-Propyl, i-Propyl, n-Butyl, sek-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren $C_1$-$C_{12}$-Alkoxygruppen kommen die weiter oben definierten Alkylgruppen mit von 1 bis 12 Kohlenstoffatomen in Betracht. Vorzugsweise verwendbare Cycloalkylreste umfassen insbesondere $C_3$-$C_{12}$-Cycloalkylreste, wie zum Beispiel Cyclopropyl, Cyclobutyl, Cyclopentyl, Cyclohexyl, Cycloheptyl,

Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und $Ar^1$ bedeuten unabhängig voneinander eine $C_6$-$C_{18}$-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist $Ar^1$ eine unsubstituierte $C_6$- oder $C_{12}$-Arylengruppe.

Als $C_6$-$C_{18}$-Arylengruppen Ar und $Ar^1$ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und $Ar^1$ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylether sind solche, die mindestens eine der folgenden Bausteine Ia bis Io als wiederkehrende Struktureinheiten enthalten:

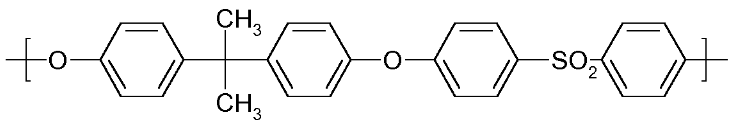
Ia

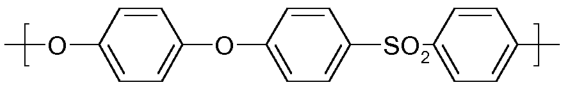
Ib

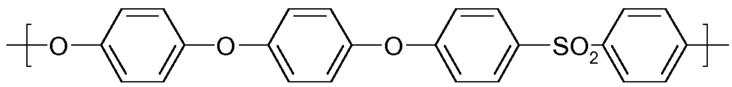
Ic

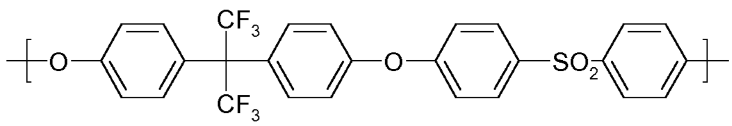
Id

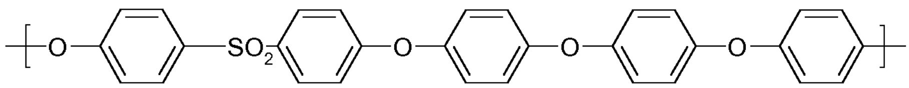
Ie

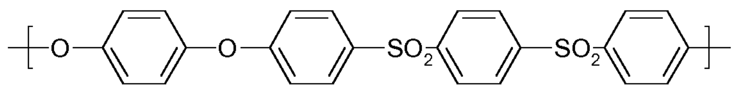
If

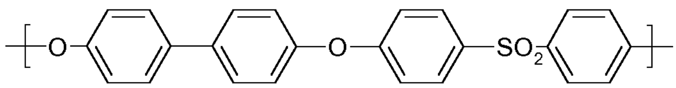
Ig

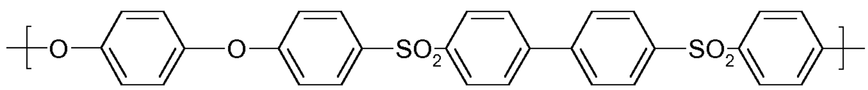
Ih

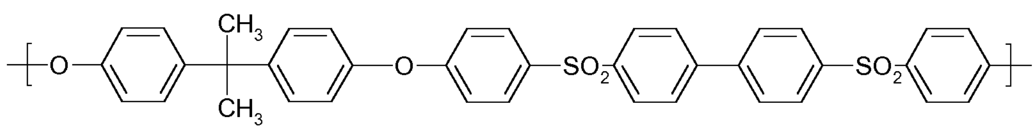
Ii

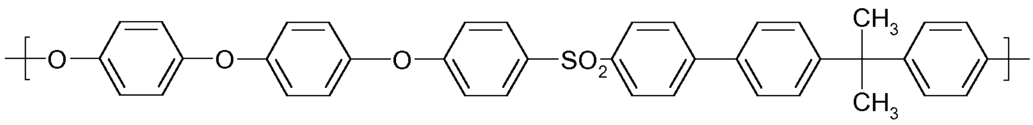

Ij

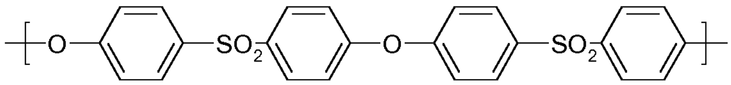

Ik

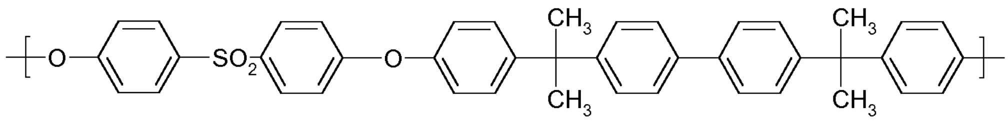

I l

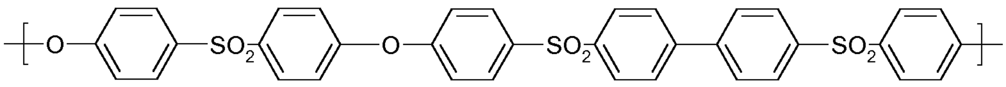

Im

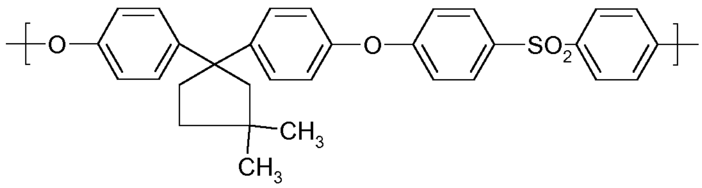

In

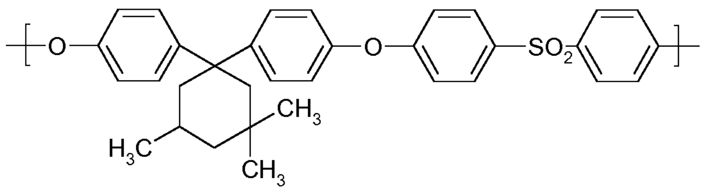

Io

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen, oder durch Naphthyleneinheiten, die von Dihydroxynaphthalin abstammen, ersetzt sind.

Als Bausteine der allgemeinen Formel (I) besonders bevorzugt sind die Bausteine Ia, Ig und Ik. Es ist außerdem besonders bevorzugt, wenn die Polyarylether im Wesentlichen aus einer Sorte Bausteine der allgemeinen Formel (I), insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = $SO_2$. Aus der vorgenannten Wiederholungseinheit aufgebaute besonders bevorzugte Polyarylethersulfone werden als Polyphenylensulfon (PPSU) bezeichnet (Formel Ig).

In einer weiteren besonders bevorzugten Ausführungsform ist Ar = 1,4-Phenylen, t = 1, q = 0, T = $C(CH_3)_2$ und Y = $SO_2$. Aus der vorgenannten Wiederholungseinheit aufgebaute besonders bevorzugte Polyarylethersulfone werden als Polysulfon (PSU) bezeichnet (Formel Ia).

In einer weiteren besonders bevorzugten Ausführungsform ist Ar = 1,4-Phenylen, t = 1, q = 0, T = Y = $SO_2$. Aus der vorgenannten Wiederholungseinheit aufgebaute besonders bevorzugte Polyarylethersulfone werden als Polyethersulfon (PESU) bezeichnet (Formel Ik).

Abkürzungen wie PPSU, PSU und PESU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Polyarylether weisen vorzugsweise gewichtsmittlere Molekulargewichte $M_w$ von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Die Polyarylether weisen vorzugsweise ein zahlenmittleres Molekulargewicht $M_n$ von 10 000 bis 35 000 g/mol auf, bestimmt mittels Gelpermeationschromatographie im Lösungsmittel Dimethylacetamid gegen engverteiltes Polymethylmethacrylat als Standard.

Die Polydispersität beträgt bevorzugt von 1,9 bis 7,5, besonders bevorzugt von 2,1 bis 4.

Darüber hinaus weisen die Polyarylether in Reinsubstanz vorzugsweise eine scheinbare Schmelzviskosität bei 350 °C/1150 $s^{-1}$ von 100 bis 1 000 Pa s, bevorzugt von 150 bis 300 Pa s und insbesondere bevorzugt von 150 bis 275 Pa s auf.

Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Herstellungsverfahren, die zu den vorgenannten Polyarylethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Polyarylether werden bevorzugt hergestellt durch die Umsetzung einer Komponente (a1) enthaltend mindestens eine aromatische Dihydroxyverbindung und einer Komponente (a2) enthaltend mindestens eine aromatische Sulfonverbindung mit zwei Halogensubstituenten. Das molare Verhältnis der Komponenten (a1) zu (a2) liegt bevorzugt im Bereich von 0,99 bis 1,4, besonders bevorzugt im Bereich von 1,0 bis 1,2 und am meisten bevorzugt im Bereich von 1,0 bis 1,1.

Die Umsetzung wird üblicherweise in Gegenwart einer Carbonatverbindung (C) durchgeführt.

Komponente (a1) enthält mindestens eine aromatische Dihydroxyverbindung. Komponente (a1) umfasst insbesondere folgende Verbindungen:

- 4,4' Dihydroxybiphenyl;
- Dihydroxybenzole, insbesondere Hydrochinon und Resorcin;
- Dihydroxynaphthaline, insbesondere 1,5-Dihydroxynaphthalin, 1,6-Dihydroxynaphthalin, 1,7- Dihydroxynaphthalin, und 2,7- Dihydroxynaphthalin;
- Andere Dihydroxybiphenyle als 4,4'-Biphenol, insbesondere 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Vorzugsweise enthält die Komponente (a1) mindestens 50 Gew.-%, mehr bevorzugt mindestens 60 Gew.-%, besonders bevorzugt mindestens 80 Gew.-% und insbesondere mindestens 95 Gew.-% mindestens einer Dihydroxykomponente ausgewählt aus der Gruppe bestehend aus 4,4'-Dihydroxybiphenyl, 2,2-Bis(4-hydroxyphenyl)propan und Bis(4-hydroxyphenyl)sulfon, jeweils bezogen auf das Gesamtgewicht der Komponente (a1). Ganz besonders bevorzugt besteht die Komponente (a1) aus mindestens einer Dihydroxykomponente ausgewählt aus der Gruppe bestehend aus 4,4'-Dihydroxybiphenyl, 2,2-Bis(4-hydroxyphenyl)propan und Bis(4-hydroxyphenyl)sulfon.

2,2-Bis(4-hydroxyphenyl)propan ist auch bekannt unter dem Namen Bisphenol A. Bis(4-hydroxyphenyl)sulfon ist auch bekannt unter dem Namen Bisphenol S.

Vorzugsweise enthält die Komponente (a2) mindestens 50 Gew.-%, bevorzugt mindestens 60 Gew.-%, besonders bevorzugt mindestens 80 Gew.-% und insbesondere mindestens 95 Gew.-% mindestens einer aromatischen Sulfonverbindung mit zwei Halogensubstituenten, jeweils bezogen auf das Gesamtgewicht der Komponente (a2).

Als Komponente (a2) geeignete aromatische Sulfonverbindungen mit zwei Halogensubstituenten sind dem Fachmann grundsätzlich bekannt. Bevorzugte Komponenten (a2) sind insbesondere Dihalogendiphenylsulfone wie 4,4'-Dichlordiphenylsulfon, 4,4'-Difluordiphenylsulfon, 4,4'-Dibromdiphenylsulfon, 2,2'-Dichlordiphenylsulfon und 2,2'-Difluordiphenylsulfon. 4,4'-Dichlordiphenylsulfon und 4,4'-Difluordiphenylsulfon sind besonders bevorzugt. Ganz besonders bevorzugt ist 4,4'-Dichlordiphenylsulfon.

Die Umsetzung von 4,4'-Dihydroxybiphenyl als Komponente (a1) und 4,4'-Dihalogendiphenylsulfon als Komponente (a2) liefert Polyphenylensulfon (PPSU) als Polyarylethersulfon (Formel Ig).

Die Umsetzung von Bisphenol A als Komponente (a1) und 4,4'-Dihalogendiphenylsulfon als Komponente (a2) liefert Polysulfon (PSU) als Polyarylethersulfon (Formel Ia).

Die Umsetzung von Bisphenol S als Komponente (a1) und 4,4'-Dihalogendiphenylsulfon als Komponente (a2) liefert Polyethersulfon (PESU) als Polyarylethersulfon (Formel Ik).

Bevorzugt als Polyarylethersulfon ist Polyphenylensulfon (PPSU) und Polyethersulfon (PESU)

Die Polyarylether können mehrere verschiedene Endgruppen aufweisen. Beispielsweise können sie Hydroxidendgruppen, Halogenendgruppen und/oder Alkoholatendgruppen aufweisen. Werden die Polyarylether im Anschluss an den Herstellungsprozess mit einem Veretherungsmittel umgesetzt, können die Polyarylether auch Etherendgruppen aufweisen. Geeignete Veretherungsmittel sind dem Fachmann bekannt und beispielsweise organische Monohalogenverbindungen.

Bevorzugte Veretherungsmittel sind ausgewählt aus der Gruppe bestehend aus Chlormethan, Brommethan, Iodmethan und Dimethylcarbonat.

Geeignete Carbonatverbindungen (C) sind dem Fachmann als solche bekannt. Bevorzugte Carbonatverbindungen (C) sind Alkalimetallcarbonate und/oder Erdalkalimetallcarbonate. Vorzugsweise sind die Carbonatverbindungen (C) wasserfrei. Geeignete Carbonatverbindungen (C) sind insbesondere wasserfreies Alkalimetallcarbonat, vorzugsweise wasserfreies Natriumcarbonat, wasserfreies Kaliumcarbonat oder Mischungen davon, wobei wasserfreies Kaliumcarbonat ganz besonders bevorzugt ist.

Die Herstellung des salzhaltigen Polymers (sP), das den Polyarylether und das Salz (S) enthält, kann in Anwesenheit eines Lösungs- oder Verdünnungsmittels erfolgen, ebenso ist die Herstellung in Abwesenheit eines Lösungs- oder Verdünnungsmittels möglich. Bevorzugt ist die Herstellung in Abwesenheit eines Lösungs- oder Verdünnungsmittels. Besonders bevorzugt ist die Herstellung in Abwesenheit eines Lösungs- oder Verdünnungsmittels als Schmelzepolymerisationsverfahren.

Verfahren zur Herstellung von Polyarylethern in Anwesenheit eines Lösungs- oder Verdünnungsmittels sind dem Fachmann als solche bekannt. Sie können in einer erfindungsgemäßen Ausführungsform auch zur Herstellung des salzhaltigen Polymers (sP) verwendet werden. Dazu werden die Komponente (a1) und die Komponente (a2) in einem aprotisch-polaren Lösungsmittel in Gegenwart einer Carbonatverbindung (C) umgesetzt. Gegebenenfalls kann das Lösungsmittel außerdem ein Schleppmittel enthalten, das mit dem bei der Kondensationsreaktion entstehenden Wasser ein Azeotrop bildet. Geeignete aprotisch-polare Lösungsmittel sind beispielsweise ausgewählt aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan und Diphenylsulfon. Geeignete Schleppmittel sind beispielsweise Toluol und/oder Chlorbenzol.

Die so hergestellten salzhaltigen Polymere (sP) können dann beispielsweise in Wasser nach dem Fachmann bekannten Methoden gefällt werden.

In einer bevorzugten Ausführungsform werden die salzhaltigen Polymere (sP) in Abwesenheit von Lösungs- oder Verdünnungsmitteln hergestellt. Sie werden besonders bevorzugt in einem Schmelzepolymerisationsverfahren hergestellt. Schmelzepolymerisationsverfahren für Polyarylether sind beispielsweise in der DE 2 749 645 und in der WO 2014/033321 beschrieben und können in einer bevorzugten Ausführungsform der vorliegenden Erfindung zur Herstellung des salzhaltigen Polymers (sP) eingesetzt werden.

Gegenstand der vorliegenden Erfindung ist somit auch ein Verfahren, bei dem das salzhaltige Polymer (sP) durch ein Schmelzepolymerisationsverfahren hergestellt wird.

Die Schmelzepolymerisation kann als Batchverfahren oder als kontinuierliches Verfahren durchgeführt werden. Bevorzugt ist die Durchführung als kontinuierliches Verfahren.

Geeignete Reaktoren sind sämtliche bekannten Reaktorformen, die zur Mischung von hochviskosen Materialien geeignet sind und außerdem eine Entfernung gasförmiger Kondensationsprodukte sowie ein Aufheizen der Monomere über deren Schmelzpunkt ermöglichen. Als Reaktoren bevorzugt sind Extruder oder Mischkneter, besonders bevorzugt sind Mischkneter. Bevorzugt sind außerdem Ein- oder Doppelwellenkneter, wobei Doppelwellenkneter besonders bevorzugt sind. Es ist weiterhin bevorzugt, dass der Mischkneter zusätzlich mit einem Rückflusskondensator ausgestattet ist, um flüchtiges Monomer, das bei den Reaktionstemperaturen gegebenenfalls verdampft, in den Mischkneter zurückzuführen.

Üblicherweise wird die Schmelzepolymerisation bei einer Temperatur durchgeführt, die unterhalb der Zersetzungstemperatur des Polyarylethers ilegt. Vorzugsweise liegt die Temperatur bei der Schmelzepolymerisation mindestens 1 °C, bevorzugt mindestens 5 °C und insbesondere bevorzugt mindestens 10 °C unterhalb der Zersetzungstemperatur des Polarylethers.

Im Allgemeinen wird die Schmelzepolymerisation bei einer Temperatur im Bereich von 200 bis 400 °C, bevorzugt im Bereich von 250 bis 350 °C durchgeführt.

In einer Ausführungsform werden die Komponente (a1) und die Komponente (a2) in einem molaren Verhältnis von 0,99 bis 1,4, bevorzugt von 1,0 bis 1,2 und insbesondere bevorzugt von 1,0 bis 1,1 in dem Mischkneter vorgelegt. Die Carbonatverbindung (C) wird dann als separate Komponente zugegeben. Bevorzugt wird die Carbonatverbindung (C) in einem molaren Verhältnis zur Komponente (a1) von 0,9 bis 1,22, bevorzugt von 1,0 bis 1,12 und insbesondere bevorzugt von 1,03 bis 1,10 zugeführt.

Werden die Komponente (a1) und die Komponente (a2) in dem Mischkneter vorgelegt, so ist es bevorzugt,

dass die Komponenten (a1) und (a2) zunächst aufgeschmolzen werden und dann die Carbonatverbindung (C) zugeführt wird. Vorzugsweise werden die Komponenten (a1) und (a2) miteinander gemischt und aufgeschmolzen und dann erst dem Mischkneter zugeführt.

Es ist außerdem möglich, die Carbonatverbindung (C) mit einer der beiden Komponenten (a1) oder (a2) vorzulegen und anschließend die zweite der beiden Komponenten (a1) oder (a2) zuzugeben. Es ist insbesondere bevorzugt, die Carbonatverbindungen (C) mit der Komponente (a1) vorzulegen. Im Allgemeinen wird dann zunächst die Komponente (a1) mit der Carbonatverbindung (C) unter Bildung eines Dialkoholats umgesetzt und anschließend die Komponente (a2) zugegeben.

Bezüglich des molaren Verhältnisses der beiden Komponenten (a1) und (a2) sowie der Carbonatverbindung (C) gelten die vorher beschriebenen Ausführungen und Bevorzugungen, auch wenn die Carbonatverbindung (C) mit einer der beiden Komponenten (a1) oder (a2) vorgelegt wird.

Die Komponente (a1) und/oder (a2) kann flüssig oder fest in den Mischkneter eingebracht werden.

Die Umsetzungszeit im Reaktor beträgt im Allgemeinen 0,5 bis 3,5 Stunden, bevorzugt 1 bis 2 Stunden.

Bei der Umsetzung der Komponente (a1) mit der Komponente (a2) in Gegenwart der Carbonatverbindung (C) werden als Kondensationsprodukte neben dem Polyarylether Wasser, Kohlenstoffdioxid und das Salz (S) gebildet. Das gebildete Wasser und das gebildete Kohlenstoffdioxid können während der Umsetzung als gasförmige Bestandteile aus dem Reaktor entfernt werden. Das Salz (S) verbleibt im Allgemeinen im Polyarylether unter Erhalt des salzhaltigen Polymers (sP). Im Allgemeinen handelt es sich bei dem Salz (S) um ein anorganisches Salz, wenn als Carbonatverbindung (C) eine anorganische Carbonatverbindung (C) eingesetzt wird. Bevorzugt handelt es sich bei dem Salz (S) um ein Alkalimetallhalogenid, wenn als Carbonatverbindung (C) ein Alkalimetallcarbonat eingesetzt wird. Am meisten bevorzugt handelt es sich bei dem Salz (S) um Kaliumchlorid und/oder Natriumchlorid, wenn als Carbonatverbindung (C) Kaliumcarbonat und/oder Natriumcarbonat eingesetzt wird.

Gegenstand der vorliegenden Erfindung ist somit auch ein Verfahren, bei dem das Salz (S) ein anorganisches Salz enthält.

Gegenstand der vorliegenden Erfindung ist weiterhin ein Verfahren, bei dem das Salz (S) Kaliumchlorid und/oder Natriumchlorid enthält.

Das Salz (S) besitzt im Allgemeinen eine Partikelgröße im Bereich von 0,1 bis 100 μm, bevorzugt im Bereich von 0,5 bis 50 μm, besonders bevorzugt im Bereich von 0,8 bis 30 μm und am meisten bevorzugt im Bereich von 1 bis 10 μm. Die Partikelgröße wird durch SEM (Scanning Electron Microscopy; Rasterelektronenmikroskopie)-Aufnahmen bei einer Beschleunigungsspannung von 8 kV bestmmt.

Das Salz (S) liegt im Allgemeinen partikulär dispers verteilt in dem salzhaltigen Polymer (sP) vor.

*Verfahrensschritt a)*

Das in Verfahrensschritt a) eingesetzte salzhaltige Polymer (sP) wird im Allgemeinen durch ein Schmelzepolymerisationsverfahren hergestellt.

Erfindungsgemäß weist das in Verfahrensschritt a) eingesetzte salzhaltige Polymer (sP) eine Oberfläche auf.

In Verfahrensschritt a) wird die Oberfläche des salzhaltigen Polymers (sP) mechanisch vergrößert unter Erhalt eines oberflächenvergrößerten salzhaltigen Polymers (osP).

Das oberflächenvergrößerte salzhaltige Polymer (osP) enthält den Polyarylether und das Salz (S), die bereits im salzhaltigen Polymer (sP) enthalten waren.

Unter "Vergrößerung der Oberfläche" wird vorliegend verstanden, dass das Verhältnis (V1) der Oberfläche des oberflächenvergrößerten salzhaltigen Polymers (osP) zum Gewicht des oberflächenvergrößerten salzhaltigen Polymers (osP) größer ist als das Verhältnis (V2) der Oberfläche des salzhaltigen Polymers (sP) zum Gewicht des salzhaltigen Polymers (sP).

Anders ausgedrückt gilt also V1 > V2, wobei

$$V1 = \frac{\text{Oberfläche des oberflächenvergößerten salzhaltigen Polymers (osP)}\left[mm^2\right]}{\text{Gewicht des oberflächenvergößerten salzhaltigen Polymers (osP)}\left[g\right]}$$

und

$$V2 = \frac{\text{Oberfläche des salzhaltigen Polymers (sP)}\left[mm^2\right]}{\text{Gewicht des salzhaltigen Polymers (sP)}\left[g\right]} .$$

Anders ausgedrückt bedeutet dies, dass die Oberfläche von beispielsweise 1 kg des oberflächenvergrößerten salzhaltigen Polymers (osP) größer ist als die Oberfläche von beispielsweise ebenfalls 1 kg des salzhaltigen Polymers (sP).

In Verfahrensschritt a) wird das Verhältnis (V2) der Oberfläche des salzhaltigen Polymers (sP) zum Gewicht des salzhaltigen Polymers (sP) mechanisch im Allgemeinen um 0,1 bis 10 000 % vergrößert, bevorzugt um 100 bis 8 000 % und besonders bevorzugt um 250 bis 5 000 % vergrößert. Die Oberfläche wird jeweils mittels SEM bestimmt.

Die mechanische Vergrößerung der Oberfläche erfolgt erfindungsgemäß bevorzugt durch Verschäumen oder Verstrecken des salzhaltigen Polymers (sP).

Gegenstand der vorliegenden Erfindung ist somit auch ein Verfahren, bei dem die mechanische Vergrößerung der Oberfläche des salzhaltigen Polymers (sP) in Verfahrensschritt a) durch Verschäumen oder Verstrecken des salzhaltigen Polymers (sP) erfolgt.

In einer Ausführungsform der vorliegenden Erfindung erfolgt die mechanische Vergrößerung der Oberfläche des salzhaltigen Polymers (sP) nicht durch Vermahlen des salzhaltigen Polymers (sP).

Zur mechanischen Vergrößerung der Oberfläche des salzhaltigen Polymers (sP) wird das salzhaltige Polymer (sP) in einen Extruder eingebracht. Die Herstellung des salzhaltigen Polymers (sP) und das Einbringen des salzhaltigen Polymers (sP) in den Extruder kann entweder diskontinuierlich oder kontinuierlich erfolgen. Bevorzugt erfolgt die Herstellung des salzhaltigen Polymers (sP) und das Einbringen des salzhaltigen Polymers (sP) in den Extruder kontinuierlich.

Unter "diskontinuierlich" wird vorliegend verstanden, dass das salzhaltige Polymer (sP) zunächst hergestellt wird in einem Batch-Verfahren oder in einem kontinuierlichen Verfahren wie vorstehend beschrieben und anschließend zu festem Polymer, beispielsweise in Form von Granulat oder Pulver, verarbeitet wird. Dieses Pulver oder Granulat wird dann in den Extruder eingebracht.

Unter "kontinuierlich" wird vorliegend verstanden, dass das salzhaltige Polymer (sP) direkt im Anschluss an seine Herstellung, bevorzugt an die Herstellung durch Schmelzepolymerisation, insbesondere bevorzugt an die Herstellung durch Schmelzepolymerisation in einem kontinuierlichen Verfahren, in den Extruder überführt wird. Im Allgemeinen wird das salzhaltige Polymer (sP) als Schmelze in den Extruder überführt, das heißt, ohne das salzhaltige Polymer (sP) erstarren zu lassen und zu vermahlen oder zu granulieren.

Vorzugsweise umfasst der Mischkneter, in dem die Schmelzepolymerisation stattfindet, den Extruder.

Gegenstand der vorliegenden Erfindung ist somit auch ein Verfahren, bei dem das in Verfahrensschritt a) eingesetzte salzhaltige Polymer (sP) bereitgestellt wird durch ein Verfahren umfassend die Schritte

a1) Herstellung des salzhaltigen Polymers (sP) durch ein Schmelzepolymerisationsverfahren
a2) Einbringen des in Verfahrensschritt a1) hergestellten salzhaltigen Polymers (sP) in einen Extruder.

Gegenstand der vorliegenden Erfindung ist außerdem ein Verfahren, bei dem Verfahrensschritt a1) und Verfahrensschritt a2) kontinuierlich durchgeführt werden.

Gegenstand der vorliegenden Erfindung ist weiterhin ein Verfahren, bei dem das in Verfahrensschritt a1) hergestellte salzhaltige Polymer (sP) als Schmelze vorliegt und in Verfahrensschritt a2) als Schmelze in den Extruder eingebracht wird.

Als Extruder sind prinzipiell alle dem Fachmann bekannten Extruder geeignet. Der Extruder kann außerdem über statische und/oder dynamische Mischorgane verfügen. Statische und/oder dynamische Mischorgane sind dem Fachmann als solche bekannt. Statische Mischorgane sind beispielsweise statische Mischer, dynamische Mischorgane sind beispielsweise Zweiwellenextruder. Erfindungsgemäß bevorzugt sind dynamische Mischorgane, insbesondere bevorzugt sind Zweiwellenextruder.

Die Temperatur im Extruder sowie dem gegebenenfalls vorhandenen statischen und/oder dynamischen Mischorgan liegt im Allgemeinen im Bereich von 200 bis 400 °C, bevorzugt im Bereich von 250 bis 350 °C. Das salzhaltige Polymer (sP) liegt daher im Allgemeinen geschmolzen im Extruder vor.

Im Anschluss an das Einbringen des salzhaltigen Polymers (sP) in den Extruder, kann die Oberfläche des salzhaltigen Polymers (sP) vergrößert werden, indem das salzhaltige Polymer verschäumt oder verstreckt wird.

Um das salzhaltige Polymer (sP) zu verstrecken, wird das salzhaltige Polymer (sP) aus dem Extruder extrudiert. Bei der Extrusion wird mindestens ein Strang des salzhaltigen Polymers (sP) erhalten. Dieser wird anschließend abgekühlt. Die Abkühlung kann beispielsweise an Luft oder in einem Wasserbad erfolgen.

Der bei der Extrusion erhaltene mindestens eine Strang des salzhaltigen Polymers (sP) kann nach dem Abkühlen unter Einwirkung von Hitze verstreckt werden. Ebenso ist es möglich und erfindungsgemäß bevorzugt, den mindestens einen Strang des salzhaltigen Polymers (sP) bereits während des Abkühlens, beispielsweise an Luft oder in einem Wasserbad, zu verstrecken unter Erhalt mindestens eines Strangs des oberflächenvergrößerten salzhaltigen Polymers (osP).

Wird der mindestens eine Strang des salzhaltigen Polymers (sP) nach dem Abkühlen unter Einwirkung von Hitze verstreckt, so liegen die Temperaturen während des Verstreckens im Allgemeinen im Bereich von 150 bis 350 °C,

bevorzugt im Bereich von 180 bis 320 °C.

Bevorzugt wird das Verstrecken des mindestens einen Strangs des salzhaltigen Polymers (sP) während des Abkühlens des mindestens einen Strangs des salzhaltigen Polymers (sP) durchgeführt. Die Temperaturen während des Verstreckens liegen dann bevorzugt im Bereich von 150 bis 350 °C und besonders bevorzugt im Bereich von 180 bis 320 °C.

Zum Verstrecken des mindestens einen Strangs des salzhaltigen Polymers (sP) eignen sich prinzipiell alle dem Fachmann bekannten Methoden. Im Allgemeinen wird der mindestens eine Strang des salzhaltigen Polymers (sP) verstreckt, indem er über ein Rollensystem geführt wird, wodurch der Durchmesser des mindestens einen Strangs des salzhaltigen Polymers (sP) reduziert wird und die Länge des salzhaltigen Polymers (sP) und damit auch die Oberfläche des salzhaltigen Polymers (sP) vergrößert werden. Dabei erstarrt das salzhaltige Polymer (sP). Während des Verstreckens bei gleichzeitigem Erstarren richten sich die im salzhaltigen Polymer (sP) enthaltenen Polymerketten aus und es bilden sich kleine Polymerfäden, wodurch sich die Oberfläche des salzhaltigen Polymers (sP) vergrößert.

Gegenstand der vorliegenden Erfindung ist somit auch ein Verfahren, bei dem Verfahrensschritt a) die folgenden Schritte umfasst:

ai) Extrusion des salzhaltigen Polymers (sP) aus einem Extruder unter Erhalt mindestens eines Strangs des salzhaltigen Polymers (sP),

aii) Verstrecken des mindestens einen Strangs des salzhaltigen Polymers (sP) durch Führung des mindestens einen Strangs des salzhaltigen Poylmers (sP) über ein Rollensystem unter Erhalt mindestens eines Strangs des oberflächenvergrößerten salzhaltigen Polymers (osP).

Gegenstand der vorliegenden Erfindung ist weiterhin ein Verfahren, bei dem Verfahrensschritt aii) während des Abkühlens des mindestens einen Strangs des salzhaltigen Polymers (sP) durchgeführt wird.

Während des Verstreckens wird die Querschnittsfläche des mindestens einen Strangs des salzhaltigen Polymers (sP) reduziert, so dass der mindestens eine Strang des oberflächenvergrößerten salzhaltigen Polymers (osP) eine geringere Querschnittsfläche besitzt als der mindestens eine Strang des salzhaltigen Polymers (sP). Im Allgemeinen verringert sich die Querschnittsfläche des mindestens einen Strangs des oberflächenvergrößerten salzhaltigen Polymers (osP) gegenüber der Querschnittsfläche des Strangs des salzhaltigen Polymers (sP) um 10 bis 99 %, bevorzugt um 30 bis 95 % und besonders bevorzugt um 50 bis 90 %.

Die Querschnittsfläche des mindestens einen Strangs des salzhaltigen Polymers (sP) liegt im Allgemeinen im Bereich von 1 bis 30 $mm^2$, bevorzugt im Bereich von 2 bis 20 $mm^2$ und insbesondere bevorzugt im Bereich von 5 bis 15 $mm^2$.

Die Querschnittsfläche des mindestens einen Strangs des oberflächenvergrößerten Salzhaltigen Polymers (osP) ist erfindungsgemäß kleiner als die Querschnittsfläche des mindestens einen Strangs des salzhaltigen Polymers (sP). Die Querschnittsfläche des mindestens einen Strangs des oberflächenvergrößerten salzhaltigen Polymers (osP) liegt im Allgemeinen im Bereich von 0,005 bis 2 $mm^2$, bevorzugt im Bereich von 0,01 bis 0,5 $mm^2$ und insbesondere bevorzugt im Bereich von 0,02 bis 0,1 $mm^2$.

Das Verhältnis (V1) der Oberfläche des oberflächenvergrößerten salzhaltigen Polymers (osP) nach dem Verstrecken zum Gewicht des oberflächenvergrößerten salzhaltigen Polymers (osP) nach dem Verstrecken ist im Allgemeinen im Vergleich zu dem Verhältnis (V2) der Oberfläche des salzhaltigen Polymers (sP) direkt nach der Extrusion und vor dem Verstrecken zum Gewicht des salzhaltigen Polymers (sP) direkt nach der Extrusion und vor dem Verstrecken um 50 bis 10 000 % vergrößert, bevorzugt um 100 bis 5 000 % vergrößert und besonders bevorzugt um 250 bis 5 000 % vergrößert.

Zum Verschäumen des salzhaltigen Polymers (sP) eignen sich prinzipiell alle dem Fachmann bekannten Methoden. In einer Ausführungsform wird das salzhaltige Polymer (sP) in dem Extruder mit einem Treibmittel vermischt unter Erhalt eines treibmittelhaltigen salzhaltigen Polymers (tsP). Bezüglich des Extruders und der Zugabe des salzhaltigen Polymers (sP) gelten die vorstehend beschriebenen Ausführungen und Bevorzugungen.

Wie vorstehend beschrieben, kann der Extruder in einer Ausführungsform der vorliegenden Erfindung statische und/oder dynamische Mischorgane umfassen. Für den Fachmann ist daher klar, dass das salzhaltige Polymer (sP) nicht nur in dem Extruder als solchem mit dem Treibmittel vermischt werden kann, sondern dass es ebenso möglich ist, dass das salzhaltige Polymer (sP) mit dem Treibmittel in dem statischen und/oder dynamischen Mischorgan vermischt wird, das der Extruder umfasst.

Unter "ein Treibmittel" wird erfindungsgemäß sowohl genau ein Treibmittel als auch zwei oder mehrere Treibmittel verstanden. Ein geeignetes Treibmittel ist beispielsweise ausgewählt aus der Gruppe bestehend aus Wasser, Kohlenstoffdioxid, Pentan und Stickstoff. Ein bevorzugtes Treibmittel ist Stickstoff und/oder Kohlenstoffdioxid.

Im Allgemeinen werden 1 bis 20 Gew.-% , bevorzugt 2 bis 15 Gew.-% und besonders bevorzugt 3 bis 10 Gew.-% eines Treibmittels mit dem salzhaltigen Polymer (sP) vermischt, jeweils bezogen auf die Gesamtstoffmenge des salzhaltigen Polymers (sP).

Während das salzhaltige Polymer (sP) in dem Extruder mit dem Treibmittel vermischt wird, liegt der Druck im Extruder im Allgemeinen im Bereich von 5 bis 100 bar, bevorzugt im Bereich von 10 bis 80 bar und besonders bevorzugt im Bereich von 15 bis 50 bar.

Die Temperatur im Extruder, während das salzhaltige Polymer (sP) mit dem Treibmittel vermischt wird, liegt im Allgemeinen im Bereich von 200 bis 400 °C, bevorzugt im Bereich von 250 bis 350 °C.

Bevorzugt liegt nach dem Mischen das Treibmittel homogen verteilt in dem treibmittelhaltigen salzhaltigen Polymer (tsP) vor.

Wenn das Treibmittel mit dem salzhaltigen Polymer (sP) im Extruder vermischt worden ist, kann anschließend das erhaltene treibmittelhaltige salzhaltige Polymer (tsP) extrudiert werden. Beim Extrudieren wird das treibmittelhaltige salzhaltige Polymer (tsP) beim Austritt aus der Öffnung des Extruders expandiert, da das Treibmittel aus dem treibmittelhaltigen salzhaltigen Polymer (tsP) entweicht. Dadurch wird das oberflächenvergrößerte salzhaltige Polymer (osP) erhalten. Das Expandieren des treibmittelhaltigen salzhaltigen Polymers (tsP) wird auch als Verschäumen bezeichnet.

Gegenstand der vorliegenden Erfindung ist somit auch ein Verfahren, bei dem Verfahrensschritt a) die folgenden Schritte umfasst:

aI) Vermischen des salzhaltigen Polymers (sP) in einem Extruder mit einem Treibmittel unter Erhalt eines treibmittelhaltigen salzhaltigen Polymers (tsP),
aII) Extrusion des treibmittelhaltigen salzhaltigen Polymers (tsP) aus dem Extruder,
aIII) Verschäumen des treibmittelhaltigen salzhaltigen Polymers (tsP) unter Erhalt des oberflächenvergrößerten salzhaltigen Polymers (osP).

Im Allgemeinen erfolgt das Verschäumen des treibmittelhaltigen salzhaltigen Polymers (tsP) direkt nach dem Austritt des treibmittelhaltigen salzhaltigen Polymers (tsP) aus dem Extruder durch die Entspannung an einer sich anschließenden Düse.

Gegenstand der vorliegenden Erfindung ist somit auch ein Verfahren, bei dem Verfahrensschrit aII) und aIII) gleichzeitig durchgeführt werden.

Das durch Verschäumen hergestellte oberflächenvergrößerte salzhaltige Polymer (osP) weist im Allgemeinen eine geringere Dichte und ein größeres Volumen auf als das salzhaltige Polymer (sP), das kein Treibmittel enthält und durch eine Öffnung gleichen Durchmessers wie das treibmittelhaltige salzhaltige Polymer (tsP) extrudiert wird.

Üblicherweise ist die Dichte des oberflächenvergrößerten salzhaltigen Polymers (osP) um 30 bis 80 % geringer als die des salzhaltigen Polymers (sP), das kein Treibmittel enthält und durch eine Öffnung gleichen Durchmessers wie das treibmittelhaltige salzhaltige Polymer (tsP) extrudiert wird, bevorzugt um 35 bis 70 % geringer und besonders bevorzugt um 40 bis 65 % geringer.

Außerdem wird durch das Verschäumen die Oberfläche des verschäumten salzhaltigen Polymers (sP) gegenüber der Oberfläche des salzhaltigen Polymers (sP) vergrößert, das kein Treibmittel enthält und durch eine Lochdüse gleichen Durchmessers wie das treibmittelhaltige salzhaltige Polymer (tsP) extrudiert wird.

Die Oberfläche des durch Verschäumen hergestellten oberflächenvergrößerten salzhaltigen Polymers (osP) ist also größer als die des salzhaltigen Polymers (sP), das kein Treibmittel enthält und durch eine Lochdüse gleichen Durchmessers wie das treibmittelhaltige salzhaltige Polymer (tsP) extrudiert wird.

Das Verhältnis (V1) der Oberfläche des durch Verschäumen hergestellten oberflächenvergrößerten salzhaltigen Polymers (osP) zum Gewicht des durch Verschäumen hergestellten oberflächenvergrößerten salzhaltigen Polymers (osP) vergrößert sich somit gegenüber dem Verhältnis (V2) der Oberfläche des salzhaltigen Polymers (sP), das kein Treibmittel enthält und durch eine Öffnung gleichen Durchmessers wie das treibmittelhaltige salzhaltige Polymer (tsP) extrudiert wird, zum Gewicht des salzhaltigen Polymers (sP), das kein Treibmittel enthält und durch eine Öffnung gleichen Durchmessers wie das treibmittelhaltige salzhaltige Polymer (tsP) extrudiert wird.

Bevorzugt ist das Verhältnis (V1) der Oberfläche des durch Verschäumung hergestellten oberflächenvergrößerten salzhaltigen Polymers (osP) zum Gewicht des durch Verschäumung hergestellten oberflächenvergrößerten salzhaltigen Polymers (osP) gegenüber dem Verhältnis (V2) der Oberfläche des salzhaltigen Polymers (sP), das kein Treibmittel enthält und durch eine Öffnung gleichen Durchmessers wie das treibmittelhaltige salzhaltige Polymer (tsP) extrudiert wird, zum Gewicht des salzhaltigen Polymers (sP), das kein Treibmittel enthält und durch eine Öffnung gleichen Durchmessers wie das treibmittelhaltige salzhaltige Polymer (tsP) extrudiert wird, um 100 bis 10 000 % vergrößert, besonders bevorzugt um 200 bis 8 000 % vergrößert und am meisten bevorzugt um 500 bis 5 000 % vergrößert.

Im Anschluss an die mechanische Vergrößerung der Oberfläche des salzhaltigen Polymers (sP) gemäß Verfahrensschritt a) wird das erhaltene oberflächenvergrößerte salzhaltige Polymer (osP) gegebenenfalls zerkleinert. Verfahrensschritt a) umfasst somit gegebenenfalls noch eine Zerkleinerung des oberflächenvergrößerten salzhaltigen Polymers (osP). Dies kann nach dem Fachmann bekannten Methoden erfolgen. Bevorzugt erfolgt die Zerkleinerung durch Granulierung oder Mahlung, besonders bevorzugt durch Granulierung. Zum Mahlen eigenen sich prinzipiell alle dem Fachmann bekannten Methoden wie beispielsweise Hammermühlen, Schwingmühlen und Rotormühlen. Die Granulierung kann beispielsweise durch Stranggranulierung oder durch Unterwassergranulierung erfolgen. Verfahren hierzu sind dem Fachmann bekannt.

Im Allgemeinen wird das oberflächenvergrößerte salzhaltige Polymer (osP) auf eine Partikelgröße im Bereich von 0,1 bis 10 mm zerkleinert, bevorzugt auf eine Partikelgröße im Bereich von 0,5 bis 7 mm und besonders bevorzugt auf eine Partikelgröße im Bereich von 0,75 bis 5 mm.

*Verfahrensschritt b)*

In Verfahrensschritt b) wird das oberflächenvergrößerte salzhaltige Polymer (osP) aus Verfahrensschritt a) mit einem Extraktionsmittel (E) in Kontakt gebracht und ein entsalztes Polymer (eP), das den Polyarylether enthält, und ein salzhaltiges Extraktionsmittel (sE), das das Extraktionsmittel (E) und das Salz (S) enthält, erhalten.

Bei Verfahrensschritt b) handelt es sich um eine Extraktion. Im Folgenden werden die Begriffe "Verfahrensschritt b)" und "Extraktion" daher synonym verwendet.

Bevorzugt wird Verfahrensschritt b) direkt im Anschluss an Verfahrensschritt a) durchgeführt.

Als Extraktionsmittel (E) kann genau ein Extraktionsmittel eingesetzt werden, ebenso ist es möglich, eine Mischung aus zwei oder mehreren Extraktionsmitteln einzusetzen.

Als Extraktionsmittel (E) eignet sich prinzipiell jedes Lösungsmittel, das das Salz (S) löst. Bevorzugt enthält das Extraktionsmittel (E) ein protisches Lösungsmittel. Besonders bevorzugt enthält das Extraktionsmittel (E) Wasser.

Gegenstand der vorliegenden Erfindung ist somit auch ein Verfahren, bei dem als Extraktionsmittel (E) ein protisches Lösungsmittel verwendet wird.

Im Allgemeinen enthält das Extraktionsmittel (E) mindestens 50 Gew.-% Wasser, bevorzugt mindestens 70 Gew.-% Wasser, insbesondere bevorzugt mindestens 80 Gew.-% Wasser und am meisten bevorzugt mindestens 90 Gew.-% Wasser, jeweils bezogen auf das Gesamtgewicht des Extraktionsmittels (E).

Gegenstand der vorliegenden Erfindung ist somit auch ein Verfahren, bei dem das Extraktionsmittel (E) in Verfahrensschritt b) Wasser enthält.

In einer am meisten bevorzugten Ausführungsform besteht das Extraktionsmittel (E) aus Wasser.

Das oberflächenvergrößerte salzhaltige Polymer (osP) wird im Allgemeinen in einem Reaktor mit dem Extraktionsmittel (E) in Kontakt gebracht. Dazu eignen sich prinzipiell alle dem Fachmann bekannten Reaktorformen wie beispielsweise Rührkesselreaktoren und Rohrreaktoren. Erfindungsgemäß bevorzugt sind Rohrreaktoren.

Es ist außerdem bevorzugt, dass der in Verfahrensschritt b) eingesetzte Reaktor von außen geheizt werden kann auf die Temperatur, bei der die Extraktion des oberflächenvergrößerten salzhaltigen Polymers (osP) mit dem Extraktionsmittel (E) stattfindet.

Erfindungsgemäß kann der Reaktor gegebenenfalls noch beispielsweise mit Zentrifugen und/oder Filtern ausgestattet sein, um das in Verfahrensschritt b) erhaltene salzhaltige Extraktionsmittel (sE) von dem in Verfahrensschritt b) erhaltenen entsalzten Polymer (eP) abzutrennen.

Das oberflächenvergrößerte salzhaltige Polymer (osP) kann in dem Reaktor als Festbett vorliegen, so dass es sich bei dem eingesetzte Reaktor um einen Festbettreaktor handelt. Ebenso ist es möglich und erfindungsgemäß bevorzugt, in Verfahrensschritt b) einen Gegenstromreaktor einzusetzen.

Gegenstromreaktoren sind dem Fachmann als solche bekannt. In einer Ausführungsform der vorliegenden Erfindung kann das oberflächenvergrößerte salzhaltige Polymer (osP) beispielsweise kontinuierlich durch den Gegenstromreaktor geströmt werden und aus entgegengesetzter Richtung das Extraktionsmittel (E) zugeführt werden.

Wird Verfahrensschritt b) in einem Festbettreaktor durchgeführt, so wird das Extraktionsmittel (E) durch den Reaktor hindurchgeleitet. Im Allgemeinen wird das Extraktionsmittel (E) von unten nach oben durch den Reaktor geleitet oder von oben nach unten. Bevorzugt wird das Extraktionsmittel (E) von unten nach oben durch den Reaktor geleitet.

Wird ein Gegenstromreaktor verwendet, so wird im Allgemeinen das oberflächenvergrößerte salzhaltige Polymer (osP) kontinuierlich von oben in den Reaktor gegeben und unten aus diesem entfernt, während gleichzeitig von unten das Extraktionsmittel (E) in den Reaktor geführt wird und oben herausströmt.

Die Verweildauer des oberflächenvergrößerten salzhaltigen Polymers (osP) in dem Gegenstromreaktor wird im Allgemeinen so eingestellt, dass sich das oberflächenvergrößerte salzhaltige Polymer (osP) im Reaktor zumindest zeitweise wie ein Festbett verhält.

Unter Verweildauer wird vorliegend die Zeit verstanden, für die das oberflächenvergrößerte salzhaltige Polymer (osP) in dem Gegenstromreaktor verbleibt.

Die Verweildauer des oberflächenvergrößerten salzhaltigen Polymers (osP) im Gegenstromreaktor kann beispielsweise eingestellt werden durch die Geschwindigkeit, mit der das oberflächenvergrößerte salzhaltige Polymer (osP) in den Reaktor eingetragen wird. Außerdem kann sie durch die Menge und die Geschwindigkeit, mit der das Extraktionsmittel (E) in den Reaktor eingebracht wird, gesteuert werden.

Im Allgemeinen liegt die Verweildauer des oberflächenvergrößerten salzhaltigen Polymers (osP) im Gegenstromreaktor im Bereich von 20 bis 140 Stunden, bevorzugt im Bereich von 40 bis 120 Stunden und besonders bevorzugt

im Bereich von 50 bis 100 Stunden.

Verfahrensschritt b) wird im Allgemeinen bei Temperaturen unterhalb der Erweichungstemperatur ($T_E$) des Polyarylethers durchgeführt.

Unter der Erweichungstemperatur ($T_E$) des Polyarylethers wird vorliegend die Glasübergangstemperatur des reinen Polyarylethers, der 2 bis 30 Gew.-% Extraktionsmittel (E) bezogen auf das Gesamtgewicht des Polyarylethers enthält, verstanden, wobei der Polyarylether kein Salz (S) enthält.

Die Erweichungstemperatur ($T_E$) des Polyarylethers kann analog zur Glasübergangstemperatur eines Polymers mittels dynamischer Differenzkalorimetrie (DDK; differential scanning calorimetrie, DSC) bestimmt werden. Die Verfahren hierzu sind dem Fachmann bekannt.

Im Allgemeinen liegt die Erweichungstemperatur ($T_E$) des Polyarylethers im Bereich von 155 bis 230 °C, bevorzugt im Bereich von 160 bis 180 °C.

Gegenstand der vorliegenden Erfindung ist somit auch ein Verfahren, bei dem Verfahrensschritt b) bei einer Temperatur unterhalb der Erweichungstemperatur ($T_E$) des Polyarylethers durchgeführt wird.

Im Allgemeinen findet die Extraktion bei einer Temperatur, die mindestens 1 °C, bevorzugt mindestens 5 °C und besonders bevorzugt mindestens 10 °C unter der Erweichungstemperatur ($T_E$) des Polyarylethers liegt, statt.

Erfindungsgemäß liegt die Temperatur bei der Extraktion bei mindestens 50 °C, bevorzugt bei mindestens 70 °C, mehr bevorzugt bei mindestens 90 °C und insbesondere bevorzugt bei mindestens 100 °C.

Bevorzugt wird Verfahrensschritt b) bei einer Temperatur im Bereich von 50 bis 159 °C, bevorzugt im Bereich von 70 bis 155 °C und insbesondere bevorzugt im Bereich von 90 bis 150 °C durchgeführt.

Verfahrensschritt b) wird im Allgemeinen bei einem Absolutdruck im Bereich von 1 bis 10 bar durchgeführt, bevorzugt im Bereich von 1 bis 7 bar, am meisten bevorzugt im Bereich von 1 bis 5 bar.

In einer bevorzugten Ausführungsform wird Verfahrensschritt b) für eine Zeitdauer im Bereich von 20 bis 150 Stunden, bevorzugt im Bereich von 40 bis 120 Stunden, am meisten bevorzugt im Bereich von 50 bis 100 Stunden durchgeführt.

Das Verhältnis des Massenstroms des oberflächenvergrößerten salzhaltigen Polymers (osP) zu dem Massenstrom des Extraktionsmittels (E) in Verfahrensschritt b) liegt im Allgemeinen im Bereich von 1 : 1 bis 1 : 100, bevorzugt im Bereich von 1 : 3 bis 1 : 20 und insbesondere im Bereich von 1 : 5 bis 1 : 10.

Im Allgemeinen wird das Extraktionsmittel (E) vor Eintritt in den Reaktor auf die zur Extraktion verwendete Temperatur gebracht. Geeignete Methoden hierzu sind dem Fachmann bekannt.

Ebenso wird das oberflächenvergrößerte salzhaltige Polymer (osP) üblicherweise bereits vor der Zugabe in den Reaktor auf die Extraktionstemperatur gebracht. Es ist außerdem möglich, den Reaktor zusätzlich von außen zu heizen, um die Temperatur in Verfahrensschritt b) in dem notwendigen Temperaturbereich zu halten.

Das in Verfahrensschritt b) erhaltene salzhaltige Extraktionsmittel (sE) enthält den Teil des Salzes (S), der aus dem salzhaltigen Polymer (sP) entfernt worden ist. Im Allgemeinen enthält das salzhaltige Extraktionsmittel (sE) 0,1 bis 20 Gew.-% des Salzes (S), bevorzugt 0,5 bis 10 Gew.-% des Salzes (S) und insbesondere bevorzugt 1 bis 5 Gew.-% des Salzes (S), jeweils bezogen auf das Gesamtgewicht des salzhaltigen Extraktionsmittels (sE).

In einer weiteren und erfindungsgemäß bevorzugten Ausführungsform wird Verfahrensschritt b) in mehreren Schritten durchgeführt. Dabei können sich die Temperaturen und Drücke in den einzelnen Stufen unterscheiden.

Gegenstand der vorliegenden Erfindung ist somit auch ein Verfahren, bei dem dass Verfahrensschritt b) die folgenden Schritte umfasst:

b1) in Kontakt bringen des oberflächenvergrößerten salzhaltigen Polymers (osP) aus Verfahrensschritt a) mit dem Extraktionsmittel (E) unter Erhalt eines vorentsalzten Polymers (veP), das den Polyarylether und Reste des Salzes (S) enthält, und eines ersten salzhaltigen Extraktionsmittels (sE1), das das Extraktionsmittel (E) und einen Teil des Salzes (S) enthält,

b2) in Kontakt bringen des vorentsalzten Polymers (veP) aus Verfahrensschritt b1) mit dem Extraktionsmittel (E) unter Erhalt des entsalzten Polymers (eP), das den Polyarylether enthält, und eines zweiten salzhaltigen Extraktionsmittels (sE2), das das Extraktionsmittel (E) und die Reste des Salzes (S) enthält.

In Verfahrensschritt b1) wird das oberflächenvergrößerte salzhaltige Polymer (osP) aus Verfahrensschritt a) mit dem Extraktionsmittel (E) in Kontakt gebracht. Für den Reaktor, in dem Verfahrensschritt b1) durchgeführt wird, sowie das Extraktionsmittel (E) gelten die gleichen Ausführungen und Bevorzugungen wie zuvor für Verfahrensschritt b) beschrieben.

Verfahrensschritt b1) wird auch als Vorextraktion bezeichnet. Die Begriffe "Verfahrensschritt b1)" und "Vorextraktion" werden im Folgenden synonym gebraucht.

Verfahrensschritt b1) wird im Allgemeinen bei einer Temperatur im Bereich von 50 bis 105 °C, bevorzugt im Bereich von 60 bis 100 °C und insbesondere bevorzugt im Bereich von 70 bis 100 °C durchgeführt.

Gegenstand der vorliegenden Erfindung ist somit auch ein Verfahren, bei dem Verfahrensschritt b1) bei einer Temperatur im Bereich von 50 bis 105 °C durchgeführt wird.

Der Absolutdruck im Reaktor während des Verfahrensschritts b1) liegt bevorzugt im Bereich von 1 bis 2 bar, besonders bevorzugt im Bereich von 1 bis 1,5 bar, am meisten bevorzugt im Bereich von 1 bis 1,2 bar.

Im Allgemeinen wird Verfahrensschritt b1) für einen Zeitraum im Bereich von 5 bis 50 Stunden durchgeführt, bevorzugt im Bereich von 7 bis 30 Stunden und insbesondere bevorzugt im Bereich von 10 bis 20 Stunden.

Gegenstand der vorliegenden Erfindung ist somit auch ein Verfahren, in dem Verfahrensschritt b1) für eine Zeit im Bereich von 5 bis 50 Stunden durchgeführt wird.

Das Verhältnis des Massenstroms des oberflächenvergrößerten salzhaltigen Polymers (osP) zu dem Massenstrom des Extraktionsmittels (E) in Verfahrensschritt b1) liegt im Allgemeinen im Bereich von 1 : 1 bis 1 : 100, bevorzugt im Bereich von 1 : 3 bis 1 : 20 und insbesondere bevorzugt im Bereich von 1 : 5 bis 1 : 10.

Durch die Vorextraktion wird ein vorentsalztes Polymer (veP), das den Polyarylether und Reste des Salzes (S) enthält, und ein erstes salzhaltiges Extraktionsmittel (sE1), das das Extraktionsmittel (E) und einen Teil des Salzes (S) enthält, erhalten.

Das erste salzhaltige Extraktionsmittel (sE1) enthält das Extraktionsmittel (E) und den Teil des Salzes (S), der aus dem oberflächenvergrößerten salzhaltigen Polymer (osP) entfernt wurde. Im Allgemeinen enthält das erste salzhaltige Extraktionsmittel (sE1) 0,09 bis 18 Gew.-% des Salzes (S), bevorzugt 0,45 bis 9 Gew.-% des Salzes (S) und insbesondere bevorzugt 0,9 bis 4,5 Gew.-% des Salzes (S), jeweils bezogen auf das Gesamtgewicht des ersten salzhaltigen Extraktionsmittels (sE1).

Unter "Reste des Salzes (S)" werden erfindungsgemäß 0,02 bis 10 Gew.-% des Salzes (S), bevorzugt 0,1 bis 8 Gew.-% des Salzes (S) und insbesondere bevorzugt 0,2 bis 6 Gew.-% des Salzes (S) verstanden, jeweils bezogen auf das Gesamtgewicht des vorentsalzten Polymers (veP).

Anders ausgedrückt enthält das in Verfahrensschritt b1) erhaltene vorentsalzte Polymer im Allgemeinen 0,02 bis 10 Gew.-% des Salzes (S), bevorzugt 0,1 bis 8 Gew.-% des Salzes (S) und insbesondere bevorzugt 0,2 bis 6 Gew.-% des Salzes (S), jeweils bezogen auf das Gesamtgewicht des vorentsalzten Polymers (veP).

Es versteht sich von selbst, dass das vorentsalzte Polymer (veP) weniger Salz (S) als das salzhaltige Polymer (sP) und das oberflächenvergrößerte salzhaltige Polymer (osP) enthält.

Enthält das salzhaltige Polymer (sP) weniger als 5 Gew.-% des Salzes (S) bezogen auf das Gesamtgewicht des salzhaltigen Polymers (sP) wird Verfahrensschritt b1) im Allgemeinen nicht durchgeführt.

In Verfahrensschritt b2) wird das vorentsalzte Polymer (veP) aus Verfahrensschritt b1) mit dem Extraktionsmittel (E) in Kontakt gebracht. Bezüglich der in Verfahrensschritt b2) verwendeten Reaktoren sowie für das Extraktionsmittel (E) gelten die gleichen Ausführungen und Bevorzugungen wie zuvor für Verfahrensschritt b) beschrieben.

Bevorzugt wird Verfahrensschritt b2) direkt im Anschluss an Verfahrensschritt b1) durchgeführt. Insbesondere bevorzugt wird Verfahrensschritt b2) in einem Reaktor durchgeführt, der von dem Reaktor, in dem Verfahrensschritt b1) durchgeführt wird, getrennt ist, wobei die beiden Reaktoren direkt aufeinander folgen. In einer ganz besonders bevorzugten Ausführungsform werden Verfahrensschritt b1) und Verfahrensschritt b2) als kontinuierliche Gegenstromextraktion durchgeführt.

Im Allgemeinen wird Verfahrensschritt b2) bei einer Temperatur im Bereich von > 105 °C bis < $T_E$ durchgeführt, wobei unter "$T_E$" die Erweichungstemperatur ($T_E$) des Polyarylethers zu verstehen ist, wie sie zuvor bereits beschrieben wurde.

Im Allgemeinen wird Verfahrensschritt b2) bei einer Temperatur, die mindestens 1 °C, bevorzugt mindestens 5 °C und insbesondere bevorzugt mindestens 10 °C unter der Erweichungstemperatur ($T_E$) des Polyarylethers liegt, durchgeführt.

Bevorzugt liegt die Temperatur während Verfahrensschritt b2) im Bereich von >105 bis 159 °C, besonders bevorzugt im Bereich von 115 bis 155 °C und insbesondere bevorzugt im Bereich von 125 bis 150 °C.

Gegenstand der vorliegenden Erfindung ist somit auch ein Verfahren, in dem Verfahrensschritt b2) bei einer Temperatur im Bereich von >105 °C bis <$T_E$ durchgeführt wird.

Der Druck während Verfahrensschritt b2) liegt im Allgemeinen im Bereich von 1 bis 10 bar, bevorzugt im Bereich von 1,5 bis 7 bar und insbesondere bevorzugt im Bereich von 2 bis 5 bar.

In einer erfindungsgemäßen Ausführungsform wird Verfahrensschritt b2) für einen Zeitraum von 10 bis 90 Stunden durchgeführt, bevorzugt im Bereich von 20 bis 80 Stunden und insbesondere bevorzugt im Bereich von 30 bis 60 Stunden.

Gegenstand der vorliegenden Erfindung ist weiterhin ein Verfahren, bei dem Verfahrensschritt b2) für eine Zeit im Bereich von 10 bis 90 Stunden durchgeführt wird.

Das Verhältnis des Massenstroms des oberflächenvergrößerten salzhaltigen Polymers (osP) zu dem Massenstrom des Extraktionsmittels (E) in Verfahrensschritt b2) liegt im Allgemeinen im Bereich von 1 : 1 bis 1 : 100, bevorzugt im Bereich von 1 : 3 bis 1 : 20 und insbesondere bevorzugt im Bereich von 1 : 5 bis 1 : 10.

In Verfahrensschritt b2) werden das entsalzte Polymer (eP), das den Polyarylether enthält, und ein zweites

salzhaltiges Extraktionsmittel (sE2), das das Extraktionsmittel (E) und die Reste des Salzes (S) enthält, erhalten.

Das zweite salzhaltige Extraktionsmittel (sE2) enthält die Reste des Salzes (S), die aus dem vorentsalzten Polymer (veP) entfernt wurden. Im Allgemeinen enthält das zweite salzhaltige Extraktionsmittel (sE2) 0 bis 2 Gew.-% des Salzes (S), bevorzugt 0 bis 1,5 Gew.-% des Salzes (S) und insbesondere bevorzugt 0 bis 1 Gew.-% des Salzes (S), jeweils bezogen auf das Gesamtgewicht des zweiten salzhaltigen Extraktionsmittels (sE2).

Das zweite salzhaltige Extraktionsmittel (sE2) kann in einer Ausführungsform der vorliegenden Erfindung als Extraktionsmittel (E) in Verfahrensschritt b1) eingesetzt werden.

Es versteht sich von selbst, dass das entsalzte Polymer (eP), das in Verfahrensschritt b) bzw. in Verfahrensschritt b2) erhalten wird, weniger Salz (S) enthält als das salzhaltige Polymer (sP) und gegebenenfalls als das vorentsalzte Polymer (veP). Im Allgemeinen enthält das entsalzte Polymer (eP) noch Spuren des Salzes (S).

Unter "Spuren des Salzes (S)" wird vorliegend ein Salzgehalt im entsalzten Polymer (eP) von ≤ 150 Gew.-ppm, bevorzugt ≤ 100 Gew.-ppm, insbesondere bevorzugt ≤80 Gew.-ppm und am meisten bevorzugt ≤ 50 Gew.-ppm des Salzes (S) verstanden, jeweils bezogen auf das Gesamtgewicht des entsalzten Polymers (eP).

Im Allgemeinen enthält das entsalzte Polymer (eP) 0,01 bis 150 Gew.-ppm des Salzes (S), bevorzugt 0,1 bis 100 Gew.-ppm, besonders bevorzugt 1 bis 80 Gew.-ppm und insbesondere 5 bis 50 Gew.-ppm des Salzes (S), jeweils bezogen auf das Gesamtgewicht des entsalzten Polymers (eP).

In einer Ausführungsform der vorliegenden Erfindung enthält das entsalzte Polymer (eP) maximal 150 Gew.-ppm, bevorzugt maximal 100 Gew.-ppm, insbesondere bevorzugt maximal 80 Gew.-ppm und am meisten bevorzugt maximal 50 Gew.-ppm des Salzes (S).

Gegenstand der vorliegenden Erfindung ist somit auch ein Verfahren, bei dem das in Verfahrensschritt b) erhaltene entsalzte Polymer (eP) maximal 150 Gew.-ppm des Salzes (S) enthält, bezogen auf das Gesamtgewicht des entsalzten Polymers (eP).

Die Untergrenze des Gehalts an Salz (S) im entsalzten Polymer (eP) liegt im Allgemeinen bei 0,01 Gew.-ppm, bevorzugt bei 0,1 Gew.-ppm, besonders bevorzugt bei 1 Gew.-ppm und insbesondere bevorzugt bei 5 Gew.-ppm.

In einer insbesondere bevorzugten Ausführungsform ist das entsalzte Polymer (eP) im Wesentlichen frei von dem Salz (S). "Im Wesentlichen frei" bedeutet im Rahmen der vorliegenden Erfindung, dass das entsalzte Polymer (eP) maximal 15 Gew.-ppm, bevorzugt maximal 10 Gew.-ppm und insbesondere bevorzugt maximal 5 Gew.-ppm des Salzes (S) enthält.

Verfahrensschritt b) kann in einer Ausführungsform der vorliegenden Erfindung wiederholt werden. Er kann dabei einmal oder auch mehrmals wiederholt werden. Ebenso können Verfahrensschritt b1) und Verfahrensschritt b2) einmal oder mehrmals wiederholt werden.

Das entsalzte Polymer (eP) kann von dem salzhaltigen Extraktionsmittel (sE) nach dem Fachmann bekannten Methoden abgetrennt werden. Beispielsweise kann es durch Filtration oder Zentrifugation von dem salzhaltigen Extraktionsmittel (sE) abgetrennt werden.

Es ist außerdem möglich, das entsalzte Polymer (eP) zu trocknen. Zur Trocknung eignen sich prinzipiell alle dem Fachmann bekannten Methoden. Beispielsweise kann das entsalzte Polymer (eP) bei erhöhten Temperaturen getrocknet werden. Bevorzugt sind Temperaturen im Bereich von 50 bis 300 °C, besonders bevorzugt im Bereich von 100 bis 200 °C. Die Trocknung kann gegebenenfalls unter vermindertem Druck durchgeführt werden.

Für die Abtrennung des entsalzten Polymers (eP) von dem zweiten salzhaltigen Extraktionsmittel (sE2) gelten die vorstehend beschriebenen Ausführungen und Bevorzugungen zur Abtrennung des entsalzten Polymers (eP) von dem salzhaltigen Extraktionsmittel (sE).

Wenn das salzhaltige Polymer (sP) in einem Schmelzepolymerisationsverfahren hergestellt worden ist, enthält das salzhaltige Polymer (sP) und damit auch das entsalzte Polymer (eP) kein Lösungs- oder Verdünnungsmittel.

Gegenstand der vorliegenden Erfindung ist somit auch ein entsalztes Polymer (eP), das kein Lösungs- oder Verdünnungsmittel und weniger als 150 Gew.-ppm des Salzes (S) enthält.

Gegenstand der vorliegenden Erfindung ist somit auch ein entsalztes Polymer (eP) erhältlich nach dem erfindungsgemäßen Verfahren.

Die nach dem erfindungsgemäßen Verfahren erhältlichen entsalzten Polymere (eP) weisen vorzugsweise eine scheinbare Schmelzviskosität bei 350 °C/1150 $s^{-1}$ von 100 bis 1 000 Pa s, bevorzugt von 150 bis 300 Pa s und insbesondere bevorzugt von 150 bis 275 Pa s auf.

Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Die Viskositätszahlen der nach dem erfindungsgemäßen Verfahren entsalzten Polymere (eP) liegen im Allgemeinen im Bereich von 20 bis 120 ml/g, bevorzugt von 30 bis 100 ml/g und insbesondere bevorzugt von 35 bis 95 ml/g, bestimmt durch Ubbelohde-Viskositätszahlmessung einer 0,01 g/ml Lösung des salzhaltigen Polymers (sP) in einer 1 :

1 Phenol/1,2-Dichlorbenzol-Mischung nach DIN 51562.

*Beispiele*

In den Tabellen bedeutet:

- C Anteil des Salzes (S) in dem salzhaltigen Polymer (sP),
- VZ die Viskositätszahl des Polymers,
- t die Zeitdauer in der die Entsalzung durchgeführt wurde,
- $M_w/M_n$ die Polydispersität,
- $M_w$ das gewichtsmittlere Molekulargewicht,
- $M_n$ das zahlenmittlere Molekulargewicht

Die Bestimmung von VZ, $M_w$ und $M_n$ erfolgte wie vorstehend beschrieben.

Herstellung der salzhaltigen Polymere

Die Herstellung des salzhaltigen Polymers (sP) für Vergleichsbeispiel V1 und Vergleichsbeispiel V2 erfolgte durch ein Schmelzepolymerisationsverfahren in einem Knetreaktor. Es wurden 4,4'-Dichlordiphenylsulfon (DCDPS) und 4,4'-Dihydroxydiphenylsulfon (DHDPS) eingesetzt. Diese Edukte wurden in dem Knetreaktor vorgelegt und bei einer Temperatur von 300 °C über einen Zeitraum von 3 Stunden polymerisiert.

Die Herstellung des salzhaltigen Polymers (sP) für Vergleilchsbeispiel V3, Beispiel 4 und Beispiel 5 erfolgte durch ein Schmelzepolymerisationsverfahren in einem Knetreaktor. Es wurde DCDPS und DHDPS sowie Kaliumcarbonat eingesetzt. Die Edukte wurden kontinuierlich durch eine Pulverschnecke in den Knetreaktor eingebracht und bei einer Temperatur von 280 °C (V3) oder 290 °C (4, 5) über einen Zeitraum von 2,5 Stunden polymerisiert.

Vergleichsbeispiel V1

Das wie vorstehend beschrieben hergestellte salzhaltige Polymer (sP) wurde auf eine Partikelgröße von etwa 3 mm vermahlen, ohne die Oberfläche nach dem erfindungsgemäßen Verfahren zu vergrößern. Die Extraktion des Salzes (S) aus dem salzhaltigen Polymer (sP) erfolgte in einem Festbettreaktor mit Wasser als Extraktionsmittel (E) über einen Zeitraum von 188 h. In regelmäßigen Abständen während der Extraktion wurde der Anteil an Salz (S) im salzhaltigen Polymer (sP) bestimmt. Die Ergebnisse sind in Tabelle 1 aufgelistet.

Die Durchflussgeschwindigkeit des Wassers betrug 500 ml/h. Die Temperatur während der Entsalzung lag im Bereich von 150 °C.

Vergleichsbeispiel V2

Das wie vorstehend beschrieben hergestellte salzhaltige Polymer (sP) wurde auf eine Partikelgröße von etwa 0,5 mm vermahlen, ohne die Oberfläche nach dem erfindungsgemäßen Verfahren zu vergrößern. Die Extraktion des Salzes (S) aus dem salzhaltigen Polymer (sP) erfolgte in einem Festbettreaktor mit Wasser als Extraktionsmittel (E) über einen Zeitraum von 299 h. In regelmäßigen Abständen während der Extraktion wurde der Anteil an Salz (S) im salzhaltigen Polymer (sP) bestimmt. Die Ergebnisse sind in Tabelle 2 aufgelistet.

Die Durchflussgeschwindigkeit des Wassers betrug 500 ml/h, ab einer Zeit von 16 h, wurde sie auf 1000 ml/h erhöht. Die Temperatur während der Entsalzung lag im Bereich von 150 °C.

Vergleichsbeispiel V3

Das wie vorstehend beschrieben hergestellte salzhaltige Polymer (sP) wurde auf eine Partikelgröße von etwa 2 mm vermahlen.

Dann wurde das vermahlene salzhaltige Polymer (sP) für 24 h bei 95 °C in einem Wasserbad behandelt. Anschließend erfolgte die Extraktion des Salzes (S) aus dem vermahlenen salzhaltigen Polymer (sP) in einem Festbettreaktor mit Wasser als Extraktionsmittel (E) über einen Zeitraum von 72 h. In regelmäßigen Abständen während der Extraktion wurde der Anteil an Salz (S) im salzhaltigen Polymer (sP) bestimmt. Die Ergebnisse sind in Tabelle 3 aufgelistet.

Die Durchflussgeschwindigkeit des Wassers im Festbettreaktor betrug 1000 ml/h. Die Temperatur während der Entsalzung lag im Bereich von 150 °C.

Beispiel 4

Das wie vorstehend beschrieben hergestellte salzhaltige Polymer (sP) wurde extrudiert und verstreckt unter Erhalt eines verstreckten oberflächenvergrößerten salzhaltigen Polymers (osP). Der Strangdurchmesser verringerte sich von 6 mm für das salzhaltige Polymer (sP) auf 1 mm für das oberflächenvergrößerte salzhaltige Polymer (osP). Das oberflächenvergrößerte salzhaltige Polymer (osP) wurde nachfolgend granuliert auf eine Granulatkornlänge von 2 bis 5 mm.

Dann wurde das oberflächenvergrößerte salzhaltige Polymer (osP) für 24 h bei 95 °C in einem Wasserbad gemäß Verfahrensschritt b1) vorextrahiert. Anschließend erfolgte die Extraktion des Salzes (S) gemäß Verfahrensschritt b2) aus dem oberflächenvergrößerten salzhaltigen Polymer (osP) in einem Festbettreaktor mit Wasser als Extraktionsmittel (E) über einen Zeitraum von 72 h. In regelmäßigen Abständen während der Extraktion wurde der Anteil an Salz (S) im salzhaltigen Polymer (sP) bestimmt. Die Ergebnisse sind in Tabelle 3 aufgelistet.

Die Durchflussgeschwindigkeit des Wassers im Festbettreaktor betrug 1000 ml/h. Die Temperatur während der Entsalzung lag im Bereich von 150 °C.

Beispiel 5

Dem wie vorstehend beschrieben hergestellten salzhaltigen Polymer (sP) wurden 5 mol-% $N_2$ und $CO_2$ beigemischt und das salzhaltige Polymer (sP) extrudiert unter Erhalt eines verschäumten oberflächenvergrößerten salzhaltigen Polymers (osP). Das oberflächenvergrößerte salzhaltige Polymer (osP) wurde nachfolgend granuliert auf eine Partikelgröße von 2 mm.

Dann wurde das oberflächenvergrößerte salzhaltige Polymer (osP) für 24 h bei 95 °C in einem Wasserbad gemäß Verfahrensschritt b1) vorextrahiert. Anschließend erfolgte die Extraktion des Salzes (S) gemäß Verfahrensschritt b2) aus dem oberflächenvergrößerten salzhaltigen Polymer (osP) in einem Festbettreaktor mit Wasser als Extraktionsmittel (E) über einen Zeitraum von 72 h. In regelmäßigen Abständen während der Extraktion wurde der Anteil an Salz (S) im salzhaltigen Polymer (sP) bestimmt. Die Ergebnisse sind in Tabelle 3 aufgelistet.

Die Durchflussgeschwindigkeit des Wassers im Festbettreaktor betrug 1000 ml/h. Die Temperatur während der Entsalzung lag im Bereich von 150 °C.

Tabelle 1

| | V1 |
|---|---|
| $M_n$ [g/mol] | 16 800 |
| $M_w$ [g/mol] | 52 900 |
| $M_w/M_n$ | 3,2 |
| Partikelgröße [mm] | ~3 |
| c(t = 1 h) [ppm] | 158 494 |
| c(t = 43 h) [ppm] | 2 617 |
| c(t = 59 h) [ppm] | 1 700 |
| c(t = 131 h) [ppm] | 344 |
| c(t = 149 h) [ppm] | 303 |
| c(t = 170 h) [ppm] | 287 |
| c(t = 188h) [ppm] | 210 |

Tabelle 2

| | V2 |
|---|---|
| $M_n$ [g/mol] | 17 700 |
| $M_w$ [g/mol] | 51 300 |
| $M_w/M_n$ | 2,9 |

(fortgesetzt)

| | V2 |
|---|---|
| Partikelgröße [mm] | ~0,5 |
| c(t = 1 h) [ppm] | 221 552 |
| c(t = 16 h) [ppm] | 1 070 |
| c(t = 41 h) [ppm] | 649 |
| c(t = 65 h) [ppm] | 554 |
| c(t = 83 h) [ppm] | 504 |
| c(t = 101 h) [ppm] | 450 |
| c(t = 169 h) [ppm] | 410 |
| c(t = 211 h) [ppm] | 405 |
| c(t = 299 h) [ppm] | 403 |

Tabelle 3

| | V3 | 4 | 5 |
|---|---|---|---|
| $M_n$ [g/mol] | 21 000 | 20 000 | 20 000 |
| $M_w$ [g/mol] | 49 200 | 47 400 | 47 400 |
| $M_w/M_n$ | 2,34 | 2,37 | 2,37 |
| Partikelgröße [mm] | ~2 | ~2 | ~2 |
| Vergrößerung der Oberfläche [%] | 0 | 1457 | 948 |
| VZ [ml/g] | 51,7 | 49,4 | 49,4 |
| c(t = 0 h) [ppm] | 243 000 | 243 000 | 243 000 |
| c(t = 24 h) [ppm] | 46 299 | 23 150 | 11 364 |
| c(t = 48 h) [ppm] | 431 | 168 | 126 |
| c(t = 72 h) [ppm] | 421 | 105 | 63 |

Figur 1 zeigt die grafische Auftragung des Anteils des Salzes (S), c [ppm], in Abhängigkeit von der Zeitdauer der Entsalzung, t [h], für Vergleichsversuch V1 (Kreise) und Vergleichsversuch V2 (Rauten). Es ist deutlich zu erkennen, dass der Anteil an Salz (S) mit der Zeit einen nahezu konstanten Wert annimmt, der im Bereich von 200 ppm bzw. im Bereich von 400 ppm Salz (S) im entsalzten Polymer (eP) liegt. Der erfindungsgemäße Anteil an Salz (S) im entsalzten Polymer (eP) von ≤150 ppm kann durch einfaches Vermahlen des salzhaltigen Polymers (sP) und anschließendes extrahieren des Salzes (S) nicht erreicht werden. Figur 1 zeigt außerdem, dass schneller ein geringerer Anteil an Salz (S) im Polymer erreicht wird, wenn das salzhaltige Polymer (sP) eine größere Partikelgröße aufweist.

Anhand der Beispiele wird deutlich, dass mit dem erfindungsgemäßen Verfahren ein geringerer Anteil an Salz (S) in dem entsalzten Polymer (eP) erhalten werden kann, im Vergleich zu den entsalzten Polymeren (eP), bei denen die Oberfläche vor der Entsalzung nicht mechanisch vergrößert wurde. Darüber hinaus wird mit dem erfindungsgemäßen Verfahren der Anteil an Salz (S) im Polymer deutlich schneller reduziert. Außerdem werden wesentlich höhere Viskositätszahlen für die erfindungsgemäß entsalzten Polymere (eP) erhalten.

## Patentansprüche

**1.** Verfahren zur Entsalzung eines salzhaltigen Polymers (sP), das einen Polyarylether und ein Salz (S) enthält, umfassend die Schritte

a) mechanische Vergrößerung der Oberfläche des salzhaltigen Polymers (sP) unter Erhalt eines oberflächenvergrößerten salzhaltigen Polymers (osP),
b) in Kontakt bringen des oberflächenvergrößerten salzhaltigen Polymers (osP) aus Verfahrensschritt a) mit einem Extraktionsmittel (E) unter Erhalt eines entsalzten Polymers (eP), das den Polyarylether enthält, und eines salzhaltigen Extraktionsmittels (sE), das das Extraktionsmittel (E) und das Salz (S) enthält,

wobei die mechanische Vergrößerung der Oberfläche des salzhaltigen Polymers (sP) in Verfahrensschritt a) durch Verschäumen oder Verstrecken des salzhaltigen Polymers (sP) erfolgt.

2. Verfahren gemäß Anspruch 1, **dadurch gekennzeichnet, dass** das salzhaltige Polymer (sP) durch ein Schmelzepolymerisationsverfahren hergestellt wird.

3. Verfahren gemäß einem der Ansprüche 1 oder 2, **dadurch gekennzeichnet, dass** das Extraktionsmittel (E) in Verfahrensschritt b) Wasser enthält.

4. Verfahren gemäß einem der Ansprüche 1 bis 3, **dadurch gekennzeichnet, dass** das in Verfahrensschritt b) erhaltene entsalzte Polymer (eP) maximal 150 Gew.-ppm des Salzes (S) enthält, bezogen auf das Gesamtgewicht des entsalzten Polymers (eP).

5. Verfahren gemäß einem der Ansprüche 1 bis 4, **dadurch gekennzeichnet, dass** Verfahrensschritt b) bei einer Temperatur unterhalb der Erweichungstemperatur ($T_E$) des Polyarylethers durchgeführt wird.

6. Verfahren gemäß einem der Ansprüche 1 bis 5, **dadurch gekennzeichnet, dass** Verfahrensschritt b) die folgenden Schritte umfasst:

b1) in Kontakt bringen des oberflächenvergrößerten salzhaltigen Polymers (osP) aus Verfahrensschritt a) mit dem Extraktionsmittel (E) unter Erhalt eines vorentsalzten Polymers (veP), das den Polyarylether und Reste des Salzes (S) enthält, und eines ersten salzhaltigen Extraktionsmittels (sE1), das das Extraktionsmittel (E) und einen Teil des Salzes (S) enthält,
b2) in Kontakt bringen des vorentsalzten Polymers (veP) aus Verfahrensschritt b1) mit dem Extraktionsmittel (E) unter Erhalt des entsalzten Polymers (eP), das den Polyarylether enthält, und eines zweiten salzhaltigen Extraktionsmittels (sE2), das das Extraktionsmittel (E) und die Reste des Salzes (S) enthält.

7. Verfahren gemäß Anspruch 6, **dadurch gekennzeichnet, dass** Verfahrensschritt b1) bei einer Temperatur im Bereich von 50 bis 105 °C durchgeführt wird.

8. Verfahren gemäß einem der Ansprüche 6 oder 7, **dadurch gekennzeichnet, dass** Verfahrensschritt b2) bei einer Temperatur im Bereich von >105 °C bis <$T_E$ durchgeführt wird.

9. Verfahren gemäß einem der Ansprüche 6 bis 8, **dadurch gekennzeichnet, dass** Verfahrensschritt b1) für eine Zeit im Bereich von 5 bis 50 Stunden durchgeführt wird.

10. Verfahren gemäß einem der Ansprüche 6 bis 9, **dadurch gekennzeichnet, dass** Verfahrensschritt b2) für eine Zeit im Bereich von 10 bis 90 Stunden durchgeführt wird.

11. Verfahren gemäß einem der Ansprüche 1 bis 10, **dadurch gekennzeichnet, dass** der Polyarylether ein Polyarylethersulfon ist.

12. Verfahren gemäß einem der Ansprüche 1 bis 11, **dadurch gekennzeichnet, dass** das Salz (S) Kaliumchlorid und/oder Natriumchlorid enthält.

## Claims

1. A method for desalinating a salt-containing polymer (SP) comprising a polyaryl ether and a salt (S), comprising the steps of

a) mechanically increasing the surface area of the salt-containing polymer (SP) to obtain a salt-containing polymer of increased surface area (SPISA),

b) contacting the salt-containing polymer of increased surface area (SPISA) from method step a) with an extractant (E) to obtain a desalinated polymer (DP) comprising the polyaryl ether, and a salt-containing extractant (SE) comprising the extractant (E) and the salt (S), the surface area of the salt-containing polymer (SP) being mechanically increased in method step a) by foaming or drawing the salt-containing polymer (SP).

**2.** The method according to claim 1, wherein the salt-containing polymer (SP) is prepared by a melt polymerization method.

**3.** The method according to either of claims 1 and 2, wherein the extractant (E) in method step b) comprises water.

**4.** The method according to any of claims 1 to 3, wherein the desalinated polymer (DP) obtained in method step b) comprises not more than 150 ppm by weight of the salt (S), based on the total weight of the desalinated polymer (DP).

**5.** The method according to any of claims 1 to 4, wherein method step b) is conducted at a temperature below the softening temperature ($T_S$) of the polyaryl ether.

**6.** The method according to any of claims 1 to 5, wherein method step b) comprises the following steps:

b1) contacting the salt-containing polymer of increased surface area (SPISA) from method step a) with the extractant (E) to obtain a pre-desalinated polymer (PDP) comprising the polyaryl ether and residues of the salt (S), and a first salt-containing extractant (SE1) comprising the extractant (E) and a portion of the salt (S),
b2) contacting the pre-desalinated polymer (PDP) from method step b1) with the extractant (E) to obtain the desalinated polymer (DP) comprising the polyaryl ether, and a second salt-containing extractant (SE2) comprising the extractant (E) and the residues of the salt (S).

**7.** The method according to claim 6, wherein method step b1) is conducted at a temperature in the range from 50 to 105°C.

**8.** The method according to either of claims 6 and 7, wherein method step b2) is conducted at a temperature in the range of >105°C to < $T_S$.

**9.** The method according to any of claims 6 to 8, wherein method step b1) is conducted for a period in the range from 5 to 50 hours.

**10.** The method according to any of claims 6 to 9, wherein method step b2) is conducted for a period in the range from 10 to 90 hours.

**11.** The method according to any of claims 1 to 10, wherein the polyaryl ether is a polyaryl ether sulfone.

**12.** The method according to any of claims 1 to 11, wherein the salt (S) comprises potassium chloride and/or sodium chloride.

## Revendications

**1.** Procédé de dessalage d'un polymère contenant un sel (sP), qui contient un éther de polyaryle et un sel (S), comprenant les étapes suivantes :

a) l'agrandissement mécanique de la surface du polymère contenant un sel (sP) pour obtenir un polymère contenant un sel à surface agrandie (osP),
b) la mise en contact du polymère contenant un sel à surface agrandie (osP) de l'étape de procédé a) avec un agent d'extraction (E) pour obtenir un polymère dessalé (eP), qui contient l'éther de polyaryle, et un agent d'extraction contenant un sel (sE), qui contient l'agent d'extraction (E) et le sel (S),

l'agrandissement mécanique de la surface du polymère contenant un sel (sP) à l'étape de procédé a) ayant lieu par moussage ou étirement du polymère contenant un sel (sP).

**2.** Procédé selon la revendication 1, **caractérisé en ce que** le polymère contenant un sel (sP) est fabriqué par un

procédé de polymérisation à l’état fondu.

3. Procédé selon l’une quelconque des revendications 1 ou 2, **caractérisé en ce que** l’agent d’extraction (E) à l’étape de procédé b) contient de l’eau.

4. Procédé selon l’une quelconque des revendications 1 à 3, **caractérisé en ce que** le polymère dessalé (eP) obtenu à l’étape de procédé b) contient au plus 150 ppm en poids du sel (S), par rapport au poids total du polymère dessalé (eP).

5. Procédé selon l’une quelconque des revendications 1 à 4, **caractérisé en ce que** l’étape de procédé b) est réalisée à une température inférieure à la température de ramollissement ($T_E$) de l’éther de polyaryle.

6. Procédé selon l’une quelconque des revendications 1 à 5, **caractérisé en ce que** l’étape de procédé b) comprend les étapes suivantes :

   b1) la mise en contact du polymère contenant un sel à surface agrandie (osP) de l’étape de procédé a) avec l’agent d’extraction (E) pour obtenir un polymère pré-dessalé (veP), qui contient l’éther de polyaryle et des résidus du sel (S), et un premier agent d’extraction contenant un sel (sE1), qui contient l’agent d’extraction (E) et une partie du sel (S),
   b2) la mise en contact du polymère pré-dessalé (veP) de l’étape de procédé b1) avec l’agent d’extraction (E) pour obtenir le polymère dessalé (eP), qui contient l’éther de polyaryle, et un deuxième agent d’extraction contenant un sel (sE2), qui contient l’agent d’extraction (E) et les résidus du sel (S).

7. Procédé selon la revendication 6, **caractérisé en ce que** l’étape de procédé b1) est réalisée à une température dans la plage allant de 50 à 105 °C.

8. Procédé selon l’une quelconque des revendications 6 ou 7, **caractérisé en ce que** l’étape de procédé b2) est réalisée à une température dans la plage allant de > 105 °C à < $T_E$.

9. Procédé selon l’une quelconque des revendications 6 à 8, **caractérisé en ce que** l’étape de procédé b1) est réalisée pendant une durée dans la plage allant de 5 à 50 heures.

10. Procédé selon l’une quelconque des revendications 6 à 9, **caractérisé en ce que** l’étape de procédé b2) est réalisée pendant une durée dans la plage allant de 10 à 90 heures.

11. Procédé selon l’une quelconque des revendications 1 à 10, **caractérisé en ce que** l’éther de polyaryle est une polyaryléthersulfone.

12. Procédé selon l’une quelconque des revendications 1 à 11, **caractérisé en ce que** le sel (S) contient du chlorure de potassium et/ou du chlorure de sodium.

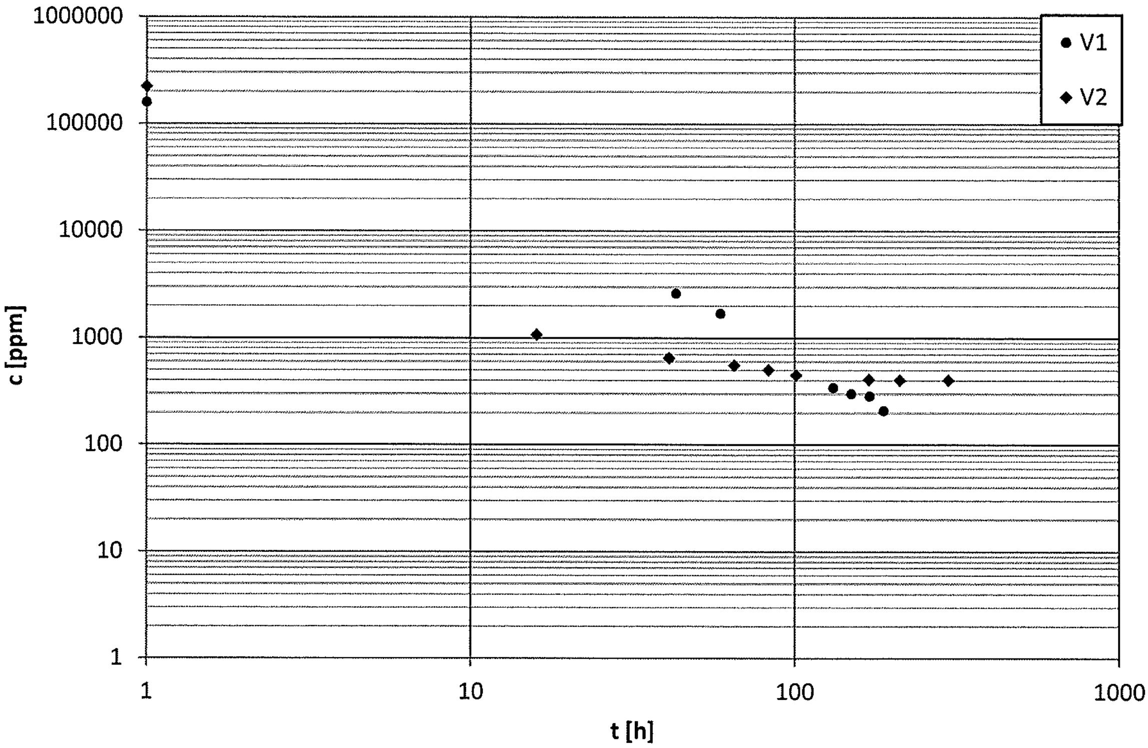


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 1957091
- EP 0000361 A
- DE 3644464
- EP 2305740 A
- US 4113698 A
- GB 2376019 A
- GB 2245577 A
- EP 2444445 A
- WO 2010046482 A
- DE 2749645
- WO 2014033321 A
- CN 102786681

### In der Beschreibung aufgeführte Nicht-Patentliteratur

- Polysulfones. **HERMAN F. MARK.** Encyclopedia of Polymer Science and Technology. 2003, vol. 4, 2-8
- Aromatic Polyethers. **HANS R. KRICHELDORF.** Handbook of Polymer Synthesis. 2005, 427-443